# FASCICULE DE BREVET EUROPEEN

(11) **EP 1 248 384 B1**
(45) Date de publication et mention de la délivrance du brevet: **22.08.2007**
(21) Numéro de dépôt: 01107740.1
(22) Date de dépôt: 02.04.2001
(51) Int. Cl.: H04B 7/005

(54) **Procede de contrôle de la puissance d'émission**
Verfahren zur Sendeleistungsregelung
Transmit power control method

(43) Date de publication de la demande: 09.10.2002
(73) Titulaire: STMicroelectronics N.V., 1077 XX Amsterdam (NL)
(72) Inventeur: Gouessant, Philippe, 92250 La Garenne-Colombes (FR); Arnaud, Thierry, 74330 Poisy (FR)
(74) Mandataire: Dossmann, Gérard

(56) Documents cités:
- EP-A- 0 859 464
- US-A- 5 267 262
- US-A- 5 673 286

## Description

L'invention concerne d'une façon générale les systèmes de communication sans fil, notamment ceux destinés à fonctionner selon la norme UMTS.

Dans un système de communication sans fil, une station de base communique avec une pluralité de terminaux distants, tels que des téléphones mobiles cellulaires. Les accès multiples par division de fréquence (FDMA : "Fréquency-Division Multiple Access" en langue anglaise) et les accès multiples par division temporelle (TDMA : "Time Division Multiple Access" en langue anglaise) sont les schémas d'accès multiples traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans provoquer d'interférence.

Les téléphones fonctionnant selon la norme GSM appartiennent aux systèmes FDMA et TDMA en ce sens que l'émission et la réception s'effectuent à des fréquences différentes et également à des intervalles temporels différents.

A l'opposé de ces systèmes utilisant une division de fréquence ou une division temporelle, les systèmes CDMA (Système à accès multiples par division de code; "Code Division Multiple Access" en langue anglaise) permettent aux utilisateurs multiples de partager une fréquence commune et un canal temporel commun en utilisant une modulation codée. Parmi les systèmes CDMA on peut citer le système CDMA 2000, le système WCDMA ("Wide Band CDMA" en langue anglaise; CDMA large bande) ou la norme IS-95.

Dans les systèmes CDMA, comme il est bien connu par l'homme du métier, un code d'embrouillage ("scrambling code" en langue anglaise) est associé à chaque station de base et permet de distinguer une station de base d'une autre. En outre, un code orthogonal, connu par l'homme du métier sous la dénomination de "Code OVSF", est alloué à chaque terminal distant (comme par exemple un téléphone mobile cellulaire). Tous les codes OVSF sont orthogonaux entre eux, ce qui permet de distinguer un terminal distant d'un autre.

Avant d'émettre un signal sur le canal de transmission à destination d'un terminal distant, le signal a été embrouillé et étalé ("spreaded " en langue anglaise) par la station de base en utilisant le code d'embrouillage de la station de base et le code OVSF du terminal distant.

Dans les systèmes CDMA, on peut encore distinguer ceux qui utilisent une fréquence distincte pour l'émission et la réception (système CDMA-FDD) et ceux qui utilisent une fréquence commune pour l'émission et la réception, mais des domaines temporels distincts pour l'émission et la réception (système CDMA-TDD).

L'invention s'applique avantageusement aux systèmes de communication du type CDMA, et plus particulièrement aux systèmes du type CDMA-FDD.

Ceci étant, l'invention s'applique également aux systèmes de communication du type FDMA et TDMA, en particulier aux téléphones GSM et GPRS, et plus généralement aux terminaux fonctionnant selon la norme UMTS qui doivent être capables par exemple de fonctionner à la fois sous un système CDMA, comme le système WCDMA et sous un système FDMA et TDMA.

Dans les terminaux distants, tels que les téléphones mobiles cellulaires, il est actuellement prévu un seul amplificateur de puissance pour l'émission, cet amplificateur de puissance ayant une large plage de fonctionnement de puissance radiofréquence. Et, notamment dans les systèmes CDMA-FDD, l'amplificateur de puissance est continuellement en fonctionnement pendant les communications.

Par ailleurs, la puissance d'émission délivrée par l'amplificateur de puissance, peut varier dans une plage de puissances prédéterminée, typiquement de -50 dBm à 24 dBm pour les téléphones mobiles de troisième génération. Dans cette plage de puissance, la puissance d'émission est ajustée en fonction d'informations de puissance régulièrement reçues par le téléphone et en provenance de la station de base.

Actuellement, l'amplificateur de puissance est conçu de façon à présenter l'efficacité la plus grande pour la puissance d'émission maximale. Par contre, pour les puissances intermédiaires ou basses, il se produit une détérioration significative de l'efficacité puisque le courant de repos de l'amplificateur de puissance ne change pas, tandis que la puissance émise décroît. Ainsi, dans ces modes de fonctionnement à puissance faible ou intermédiaire, l'efficacité, c'est-à-dire le rendement, décroît de façon drastique jusqu'à des valeurs inférieures au pourcent.

Il en résulte alors une perte d'énergie au niveau de la batterie, ce qui diminue sa durée de vie.

L'invention vise à apporter une solution à ce problème.

Le document US-A-5 267 262 décrit le réglage de gain d'un moyen d'amplification à gain variable en fonction d'informations de puissance.

Un but de l'invention est de contrôler la puissance d'émission d'un terminal distant en particulier un téléphone mobile cellulaire, de façon à optimiser son efficacité sans affecter la qualité du service transmis et sans provoquer notamment de distorsion du signal.

L'invention propose donc un procédé de contrôle de la puissance d'émission d'un terminal distant d'un système de communication sans fil, par exemple un téléphone mobile cellulaire, dans une plage de puissance prédéterminée, procédé dans lequel on ajuste la puissance d'émission en fonction d'informations de puissance (consignes) reçues par le téléphone.

Selon une caractéristique générale de l'invention, on équipe le téléphone avec un moyen d'amplification à gain variable capable de couvrir ladite plage de puissance, et on règle la valeur du gain et de la tension d'alimentation du moyen d'amplification en fonction desdites informations de puissance.

L'invention permet donc d'ajuster d'une part le gain du moyen d'amplification en fonction de la puissance demandée de façon à limiter au maximum toute dissipation thermique de puissance. Par ailleurs, l'homme du métier sait que l'un des paramètres d'un amplificateur est le recul par rapport à son point de saturation (plus connu par l'homme du métier sous sa dénomination anglaise de « back-off »). Or, une modification du gain de l'amplificateur et par conséquent une modification de sa puissance de sortie entraîne une modification du back-off qui peut dans certains cas devenir trop faible augmentant alors les risques d'un fonctionnement non linéaire de l'amplificateur (distorsion du signal). Or, l'invention en réglant également la valeur de la tension d'alimentation du moyen d'amplification vise à obtenir un back-off optimum.

Bien que l'utilisation comme moyen d'amplification, d'un seul amplificateur de puissance à gain variable capable de couvrir toute la gamme de puissance soit envisageable, on peut également réaliser le moyen d'amplification à gain variable à partir d'au moins deux amplificateurs de puissance individuellement sélectionnables, capables de couvrir ensemble la totalité de la plage de puissance, et possédant respectivement deux zones de fonctionnement spécifiques différentes et une zone commune de fonctionnement. Et, la sélection de l'un ou de l'autre de ces deux amplificateurs conduit fonctionnellement à une variation du gain de l'étage amplificateur.

On associe alors avantageusement l'un des amplificateurs à chaque point de la plage de puissance en fonction d'un critère d'attribution prédéterminé. Ce critère d'attribution est de préférence un critère d'efficacité. Ainsi, on peut par exemple associer à chaque point de la plage de puissance l'amplificateur dont le rendement est le plus élevé pour ce point. Ceci peut aisément s'appliquer par exemple pour un système GSM dans lequel les moyens de traitement du téléphone connaissent la puissance requise par la station de base à l'instant de l'occurrence temporelle de l'intervalle temporel alloué au téléphone. Aussi, en fonction de cette information de puissance, l'un ou l'autre des amplificateurs pourra être sélectionné juste avant le début de l'intervalle temporel alloué au téléphone Ceci étant, comme on le verra plus en détail ci-après, un tel critère d'efficacité peut être modulé, par exemple dans les systèmes WCDMA pour prévoir une commutation des amplificateurs avec une perturbation moindre pour la transmission des données. Ceci peut alors conduire à associer certains points de la zone commune à l'amplificateur qui présente la plus grande efficacité et à associer certains autres points de la zone commune à l'amplificateur qui ne présente pas la plus grande efficacité.

Dans un mode particulier de mise en oeuvre s'appliquant tout particulièrement à un système GSM, en présence d'une information de puissance reçue correspondant à un point de la zone commune, on vérifie si cette information de puissance correspond à l'amplificateur actuellement sélectionné. Si tel est le cas, on continue à utiliser l'amplificateur pour la délivrance de la puissance d'émission. Dans le cas contraire, on sélectionne l'amplificateur de puissance associée à ladite information de puissance. Dans tous les cas, quel que soit l'amplificateur sélectionné, on règle en outre la valeur de la tension d'alimentation de cet amplificateur en fonction des informations de puissance.

Le fait de prévoir une zone commune de fonctionnement pour les deux amplificateurs permet de prendre en compte les imprécisions éventuelles sur les valeurs des gains des deux amplificateurs, de façon à éviter notamment tout « trou» dans la plage de puissance.

En variante, l'un au moins des amplificateurs peut être à gain variable. Et, outre la sélection de l'un de ces amplificateurs, on règle avantageusement la valeur du gain d'amplificateur sélectionné en fonction de l'information de puissance.

Dans un système CDMA, et notamment un système WCDMA, l'amplificateur de puissance est continuellement en fonctionnement pendant les communications puisqu'il n'y a pas de notion de partage temporel. Aussi, il convient dans ce cas, lorsqu'on utilise également deux amplificateurs de puissance individuellement sélectionnables et capables de couvrir ensemble la totalité de la plage de puissance, de choisir l'instant de commutation qui va occasionner une perturbation minimale dans la transmission.

C'est pourquoi, en présence d'une information de puissance reçue correspondant à un point de la zone commune, on vérifie si cette information de puissance correspond à l'amplificateur actuellement sélectionné. Si tel est le cas, on continue à utiliser cet amplificateur pour la délivrance de la puissance d'émission.

Dans le cas contraire, on définit une plage temporelle de commutation s'étendant depuis l'instant de réception de ladite information de puissance sur une durée prédéterminée compatible avec les limites de ladite zone commune. On définit également en fonction d'un critère prédéterminé d'interruption d'émission, les limites temporelles d'une plage temporelle d'interruption se situant dans ladite plage de commutation.

On continue, éventuellement à partir de nouvelles informations de puissance reçues, à ajuster la puissance d'émission avec l'amplificateur actuellement sélectionné jusqu'à l'occurrence de ladite plage d'interruption. Puis, si la dernière information de puissance reçue avant l'occurrence de ladite plage d'interruption, ne correspond toujours pas à l'amplificateur actuellement sélectionné, on inhibe l'émission pendant ladite plage d'interruption, on sélectionne l'amplificateur de puissance associé à ladite dernière information de puissance, et on réactive l'émission avec le nouvel amplificateur sélectionné.

En d'autres termes, lorsque la puissance d'émission requise par la station de base atteint une limite pour l'amplificateur de puissance actuellement sélectionné, cet amplificateur de puissance doit être commuté. Mais, puisque cet amplificateur de puissance (qui doit être désélectionné) et le nouvel amplificateur de puissance (qui doit être sélectionné) possèdent une zone de fonctionnement commune, le point de commutation peut être choisi de façon flexible dans une plage temporelle (plage de commutation) correspondant aux limites de la zone de fonctionnement commune. Et, à l'intérieur de cette plage de commutation, l'invention prévoit de choisir l'instant de commutation qui va occasionner une perturbation minimale dans la transmission.

Là encore, tout comme pour les systèmes GSM, on peut, dans les systèmes CDMA prévoir que l'un au moins des amplificateurs soit à gain variable. Et, outre le fait de régler la tension d'alimentation en fonction des informations de puissance, on réglera en outre la valeur du gain de l'amplificateur sélectionné en fonction de l'information de puissance.

Généralement, les informations émises sont formées de "fragments" ("chips" en langue anglaise) et sont véhiculées au sein de trames successives subdivisées chacune en un nombre prédéterminé d'intervalles ("slots" en langue anglaise). La durée de la plage de commutation est alors avantageusement de l'ordre de quelques intervalles, par exemple quatre à huit intervalles. De même, la durée de la plage temporelle d'interruption est avantageusement de l'ordre de quelques fragments, par exemple deux à quatre fragments.

Selon un mode particulier de mise en oeuvre de l'invention, le critère d'interruption d'émission comporte le choix d'au moins un évènement particulier prédéterminé pouvant se produire au cours d'une émission et ayant un impact prédéterminé sur le taux d'erreur binaire (BER : "Binary Error Rate" en langue anglaise) en cas d'interruption d'émission lors de l'occurrence de cet évènement particulier. On analyse alors les caractéristiques de l'émission de façon à détecter la présence éventuelle de cet évènement particulier prédéterminé à l'intérieur de la plage de commutation. Et, si cette présence est effective, on place ladite plage temporelle d'interruption lors de l'occurrence de cet évènement particulier.

Ainsi, l'interruption de l'émission pour permettre la commutation des amplificateurs aura l'impact prédéterminé souhaité sur l'émission, en pratique un impact négligeable.

Il est particulièrement avantageux que le critère d'interruption d'émission comporte le choix d'un groupe de plusieurs évènements particuliers prédéterminés pouvant se produire au cours d'une émission, et l'ordonnancement de ces évènements particuliers selon un ordre de priorité prédéterminé en fonction de leurs impacts respectifs sur le taux d'erreur binaire en cas d'interruption d'émission lors de l'occurrence de ces évènements particuliers.

Ainsi, par exemple, l'événement particulier ayant la priorité la plus élevée correspondra à celui pour lequel l'impact sur le taux d'erreur binaire sera le plus faible si l'interruption de l'émission se produit lors de l'occurrence de cet évènement particulier.

L'évènement particulier qui sera alors affecté de la priorité la plus faible correspondra à celui dont l'impact sur le taux d'erreur binaire sera le plus élevé, si l'interruption de l'émission se produit au cours de cet évènement particulier.

On analyse alors avantageusement les caractéristiques de l'émission en considérant ledit ordre de priorité, de façon à détecter la présence éventuelle pendant ladite plage de commutation d'un évènement particulier prédéterminé dudit groupe. Et, on place ladite plage temporelle d'interruption lors de l'occurrence du premier évènement particulier ainsi détecté dans l'ordre de priorité.

En d'autres termes, si on détecte la présence de l'événement particulier ayant la priorité la plus élevée, c'est au cours de l'occurrence de cet évènement que l'on placera ladite plage d'interruption. Par contre, si l'on ne détecte pas un évènement particulier affecté de la priorité la plus élevée, on cherchera alors à détecter un évènement ayant une priorité plus faible, et ainsi de suite. Et, dès que l'on détecte un évènement particulier, on place la plage d'interruption lors de l'occurrence de cet évènement particulier.

Ainsi, lorsque les informations émises comportent des données et des indications de contrôle, et sont véhiculées au sein de trames successives subdivisées chacune en un nombre prédéterminé d'intervalles, les indications de contrôle comportant des informations en retour (FBI : "Feedback Information") et des indicateurs de combinaison de format de transport (TFCI : "Transport Format Combination Indicator"), le groupe d'évènements particuliers est alors constitué, par exemple, par ordre de priorité décroissant :
- des intervalles vides lors d'un mode d'émission comprimé (cet évènement particulier étant alors affecté de la priorité la plus élevée),
- des intervalles au cours desquels l'émission doit être interrompue dans un mode d'émission dit "hâché" ("gated mode" en langue anglaise),
- des parties des intervalles de silence dans un mode de transmission discontinu, au cours desquelles on n'émet ni informations en retour (FBI), ni indicateurs de combinaison de format de transport (TFCI),
- des parties des intervalles au cours desquelles on émet des données ayant un facteur d'étalement ("spreading factor" en langue anglaise) élevé, par exemple 128 ou 256, mais au cours desquelles on n'émet ni informations en retour (FBI), ni indicateurs de combinaison de format de transport (TFCI),
- des parties des intervalles au cours desquelles on émet des données ayant un facteur d'étalement faible, c'est-à-dire inférieur ou égal à 64, mais sans émettre ni informations en retour (FBI), ni indicateurs de combinaison de format de transport (TFCI),
- des parties des intervalles au cours desquelles on émet des informations en retour (FBI) ou des indicateurs de combinaison de format de transport (TFCI).

Ce dernier évènement est celui qui a la priorité la plus faible et qui a par conséquent l'impact le plus élevé sur le taux d'erreur binaire. Mais, à défaut d'avoir trouvé un évènement particulier ayant une priorité plus élevée dans la liste qui vient d'être évoquée, on choisira néanmoins de commuter l'amplificateur au cours de la transmission des informations de contrôle FBI ou TFCI, plutôt que de risquer de perdre la transmission.

L'invention a également pour objet un terminal distant pour système de communication sans fil, par exemple un téléphone mobile cellulaire, comprenant une chaîne de réception, une chaîne d'émission, un étage d'amplification de puissance connecté entre la chaîne d'émission et l'antenne, et un étage de traitement apte à ajuster la puissance de sortie de l'étage d'amplification en fonction d'informations de puissance régulièrement reçues par la chaîne de réception.

Selon une caractéristique générale de l'invention, l'étage d'amplification de puissance comporte un moyen d'amplification à gain variable capable de couvrir ladite plage de puissance. Et, les moyens de traitement sont aptes à régler la valeur du gain et de la tension d'alimentation du moyen d'amplification en fonction desdites informations de puissance.

À titre indicatif, la nouvelle valeur du gain sera fonction de la nouvelle valeur de puissance de sortie et, on peut prévoir que les moyens de traitement comportent en outre un tableau (mémoire) fournissant, pour chaque valeur, de la puissance d'émission, et du gain, une valeur pour la tension d'alimentation du moyen d'amplification.

Par ailleurs, bien qu'il soit possible d'utiliser comme alimentation du moyen d'amplification, un régulateur linéaire, il est particulièrement avantageux d'utiliser une alimentation à découpage, commandable, permettant de délivrer et de régler la tension d'alimentation à partir de la tension batterie. L'efficacité est ainsi améliorée, la dissipation plus faible, et une telle alimentation permet en outre d'élever la tension d'alimentation par rapport à la tension de batterie, lorsque requis par la consigne de puissance de sortie.

Comme indiqué plus haut, une façon de réaliser le moyen d'amplification à gain variable consiste à utiliser au moins deux amplificateurs de puissance individuellement sélectionnables, capables de couvrir ensemble la totalité de la plage de puissance, possédant respectivement des zones de fonctionnement spécifiques différentes et une zone commune de fonctionnement.

Dans ce cas, l'étage d'amplification de puissance comporte en outre des moyens de sélection aptes à répondre à une information de sélection, à relier la sortie de la chaîne d'émission, à l'entrée de l'amplificateur de puissance correspondant à ladite information de sélection.

Par ailleurs, l'étage de traitement comporte une table de correspondance association l'un des amplificateurs à chaque point de la plage de puissance en fonction d'un critère d'attribution, et des moyens de contrôle aptes en présence d'une information de puissance reçue correspondant à un point de la zone commune, à vérifier si cette information de puissance correspond à l'amplificateur actuellement sélectionné.

Dans un mode de réalisation plus particulièrement adapté aux téléphones GSM ou GPRS, l'étage de traitement comporte en outre des moyens de commande aptes, si cette information de puissance ne correspond pas à l'amplificateur actuellement sélectionné, à délivrer aux moyens de sélection l'information de sélection correspondant à l'amplificateur de puissance associé à cette information de puissance.

Par ailleurs, les moyens de commande sont également aptes à régler la valeur de la tension d'alimentation de l'amplificateur sélectionné.

En variante, l'un au moins des amplificateurs peut être à gain variable, les moyens de commande étant alors aptes à régler en outre la valeur du gain de l'amplificateur sélectionné en fonction de ladite information de puissance.

Dans un mode de réalisation plus particulièrement adapté au système CDMA, et notamment WCDMA, les moyens de contrôle sont aptes en présence d'une information de puissance reçue correspondant à un point de la zone commune, à vérifier si cette information de puissance correspond à l'amplificateur actuellement sélectionné, et dans le cas contraire à définir une plage temporelle de commutation s'étendant depuis l'instant de réception de ladite information de puissance sur une durée prédéterminée compatible avec les limites de ladite zone commune, et à définir en fonction d'un critère prédéterminé d'interruption d'émission, les limites temporelles d'une plage temporelle d'interruption se situant dans ladite plage de commutation.

Par ailleurs, les moyens de commande sont aptes à autoriser la poursuite, éventuellement à partir de nouvelles informations de puissance reçues, de l'ajustement de la puissance d'émission avec l'amplificateur actuellement sélectionné jusqu'à l'occurrence de ladite plage d'interruption, puis, si la dernière information de puissance reçue avant l'occurrence de ladite plage d'interruption ne correspond toujours pas à l'amplificateur actuellement sélectionné, à inhiber l'émission pendant ladite plage d'interruption, à délivrer aux moyens de sélection l'information de sélection correspondant à l'amplificateur de puissance associé à la dernière information de puissance, et à réactiver l'émission avec le nouvel amplificateur sélectionné.

D'autres avantages et caractéristiques de l'invention apparaîtront à l'examen de la description détaillée de modes de mise en oeuvre et de réalisation, nullement limitatifs, et des dessins annexés, sur lesquels :
- la figure 1 illustre de façon schématique une architecture de principe d'un téléphone mobile cellulaire selon l'invention, et plus particulièrement la chaîne d'émission et l'étage amplificateur de puissance,
- la figure 2 illustre de façon schématique un mode de réalisation d'un téléphone mobile cellulaire selon l'invention dans lequel le moyen d'amplification à gain variable est formé de deux amplificateurs sélectionnables
- la figure 3 illustre toujours schématiquement, plus particulièrement, la partie réception d'un téléphone mobile cellulaire selon l'invention;
- la figure 4 illustre schématiquement deux courbes d'efficacité associées à deux amplificateurs de puissance équipant l'étage d'amplification de puissance d'un téléphone mobile selon l'invention;
- la figure 5 illustre plus en détail, mais toujours schématiquement, la structure interne d'un étage de traitement numérique d'émission d'un téléphone mobile cellulaire selon l'invention ;
- la figure 6 illustre schématiquement une structure de trame temporelle de réception émise par une station de base à destination d'un téléphone mobile cellulaire;
- la figure 7 illustre schématiquement une trame d'émission émise par un téléphone mobile cellulaire à destination d'une station de base, dans un mode normal d'émission;
- la figure 8 illustre schématiquement et partiellement une structure d'une trame d'émission dans un mode d'émission comprimé;
- la figure 9 illustre toujours schématiquement et partiellement une structure d'une trame d'émission dans un mode de transmission discontinu;
- la figure 10 illustre schématiquement un organigramme d'un mode de mise en oeuvre du procédé selon l'invention, permettant la commutation à un instant choisi d'un amplificateur de puissance; et
- la figure 11 est un chronogramme temporel schématique correspondant à un mode de mise en oeuvre du procédé selon l'invention et,
- les figures 12 et 13 illustrent un autre mode de réalisation d'un téléphone selon l'invention dans lequel les deux amplificateurs sélectionnables sont à gain variable.

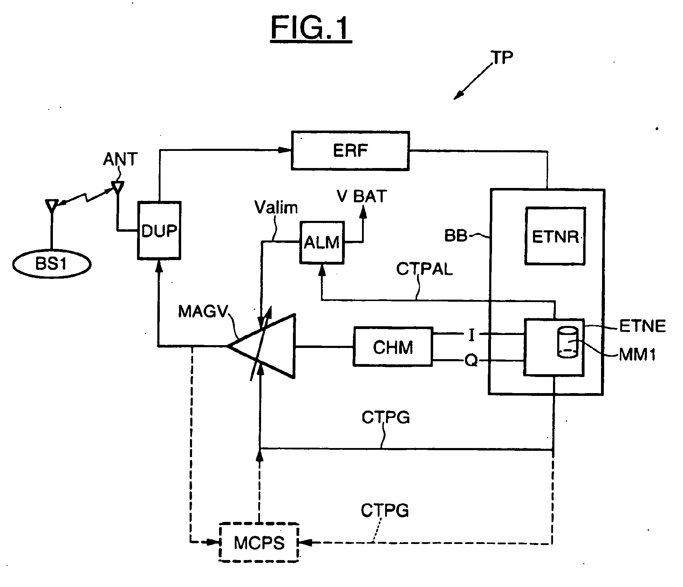

Sur la figure 1, la référence TP désigne un terminal distant, tel qu'un téléphone mobile cellulaire, qui est en communication avec une station de base BS1, par exemple selon un schéma de communication du type CDMA-FDD.

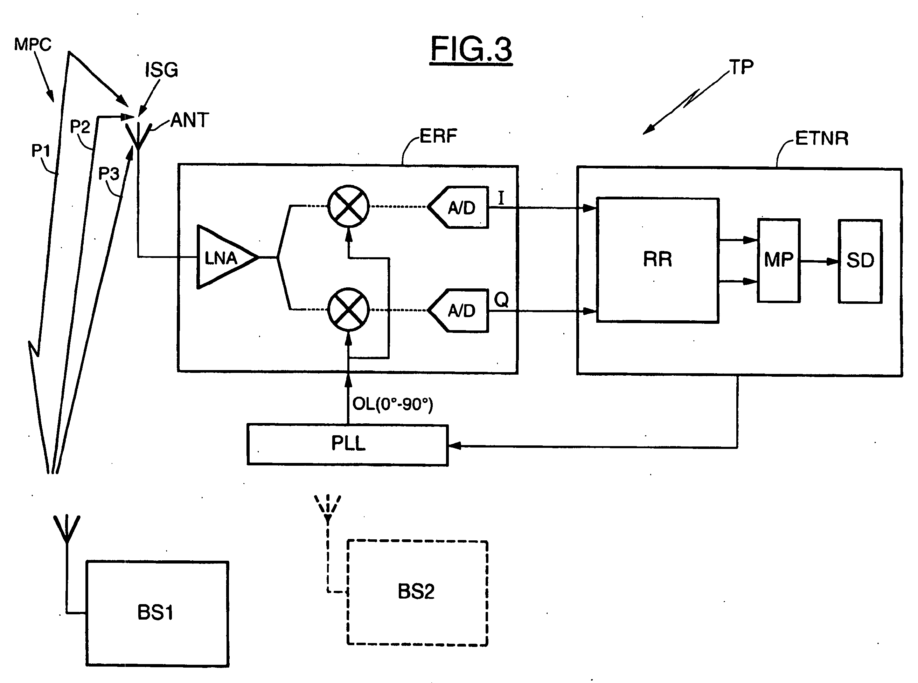

Le téléphone mobile cellulaire comprend, de façon classique, un étage analogique radiofréquence ERF connecté à une antenne ANT par l'intermédiaire d'un duplexeur DUP, pour recevoir un signal d'entrée ISG (figure 3).

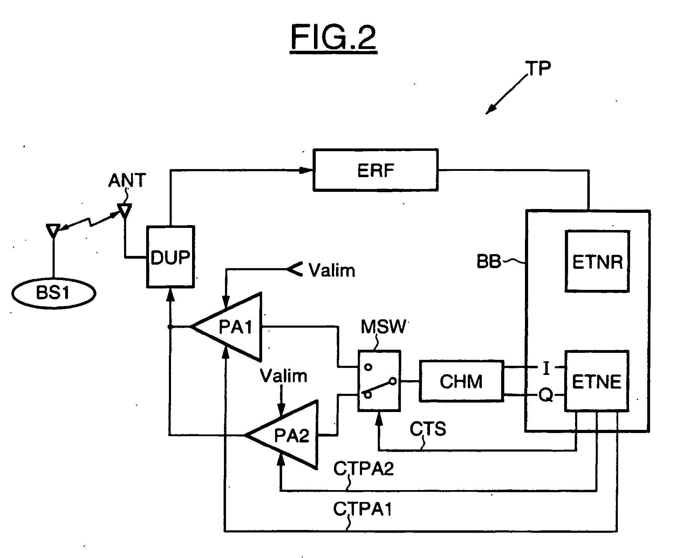

Classiquement, l'étage ERF comprend (figure 3) un amplificateur faible bruit LNA et deux voies de traitement comportant des mélangeurs, des filtres et amplificateurs classiques (non représentés sur la figure 2 à des fins de simplification). Les deux mélangeurs reçoivent respectivement de la part d'une boucle à verrouillage de phase PLL deux signaux présentant mutuellement une différence de phase de 90°. Après transposition de fréquence dans les mélangeurs, les deux voies de traitement définissent respectivement deux flux I (flux direct) et Q (flux en quadrature) selon une dénomination bien connue de l'homme du métier.

Après conversion numérique dans des convertisseurs analogiques/numériques, les deux flux I et Q sont délivrés à un étage de traitement de réception ETNR.

Cet étage de traitement ETNR comprend, de façon classique, un récepteur RR, communément désigné par l'homme du métier "récepteur Rake", suivi par des moyens classiques de démodulation MP qui effectuent la démodulation de la constellation délivrée par le récepteur Rake RR.

En raison des réflexions possibles du signal initialement transmis, sur des obstacles se situant entre la station de base et le téléphone mobile, le milieu de transmission est en fait un milieu de transmission multi-trajets MPC, c'est-à-dire comprenant plusieurs chemins de transmission différents (trois chemins de transmission P1, P2, P3 sont représentés sur la figure 3). En conséquence, le signal ISG qui est reçu par le téléphone mobile comporte différentes versions temporellement retardées du signal initialement transmis, versions qui sont le résultat des caractéristiques de transmission multi-trajets du milieu de transmission. Et, chaque trajet introduit un retard différent.

Le récepteur Rake RR, qui équipe un téléphone mobile cellulaire fonctionnant dans un système de communication CDMA, est utilisé pour effectuer l'alignement temporel, le désembrouillage, le désétalement et la combinaison des versions retardées des signaux initiaux, de façon à délivrer les flux d'informations contenus dans les signaux initiaux. Bien entendu, le signal reçu ISG pourrait également résulter de la transmission de signaux initiaux respectivement émis par différentes stations de base BS1 et BS2.

L'étage de traitement ETNR comprend également de façon classique un décodeur de source SD qui effectue un décodage de source bien connu par l'homme du métier.

Enfin, comme il est également bien connu par l'homme du métier, la boucle à verrouillage de phase PLL est commandée par un algorithme de contrôle automatique de fréquence incorporé dans un processeur de l'étage ETNR.

Ainsi qu'il est bien connu de l'homme du métier, avant transmission via l'antenne de la station de base BS1, le signal initial contenant les informations (symboles) est embrouillé ("scrambled" en langue anglaise) et étalé ("spreaded") par des moyens de traitement de la station de base, en utilisant le code d'embrouillage ("scrambling code") de la station de base et le code orthogonal (code OVSF) du téléphone TP.

En conséquence, les symboles sont transformés en fragments ("chips" en langue anglaise) ayant une longueur prédéterminée (par exemple égale à 260 ns), et correspondant à un taux de fragments prédéterminé (chip rate) égal par exemple à 3,84 Mcps. Ainsi, le taux de fragments (chip rate) est plus grand que le taux de symboles (symbol rate).

Ainsi, un symbole peut être transformé en un nombre de fragments pouvant aller de 4 à 256.

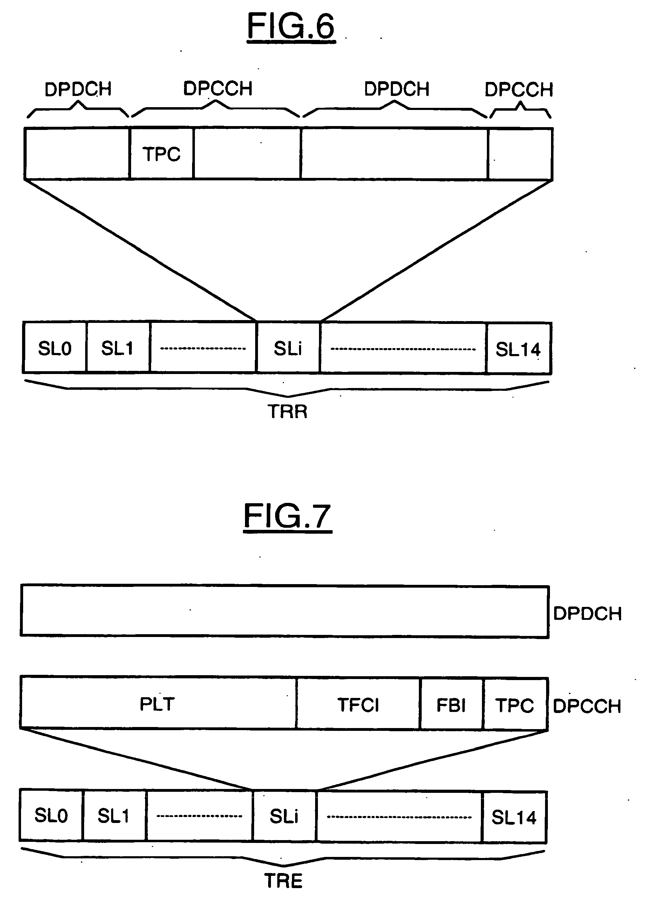

Comme illustré sur la figure 6, les informations émises par la station de base et formées de fragments, sont véhiculées au sein de trames successives TRR subdivisées chacune en un nombre prédéterminé d'intervalles ("slots" en langue anglaise) SLi. A titre indicatif, chaque trame TRR, ayant une longueur de 10 ms, est subdivisée en quinze intervalles SL0-SL14, chaque intervalle ayant une longueur égale à 2560 fragments.

Les informations reçues par le téléphone et émanant de la station de base, comportent des données proprement dites véhiculées sur un canal de données DPDCH, et des indications de contrôle véhiculées sur un canal de contrôle DPCCH. Dans le sens descendant ("downlink" en langue anglaise), chaque intervalle temporel SLi de la trame TRR contient de façon imbriquée (figure 6) des données et des indication de contrôle. Ceci est parfaitement connu de l'homme du métier. Néanmoins, celui-ci pourra se référer pour plus de détails à la spécification technique 3G TS 25.211, éditée par l'organisme 3GPP, 650 Route des Lucioles - Sophia Antipolis-Valbonne-France, et intitulée "3rd Generation Partnership Project; Technical Specification Group Radio Access Network; Physical channels and mapping of transport channels onto physical channels (FDD), (Release 1999).

Parmi ces indications de contrôle, figure un mot TPC ("Transmit power control" en langue anglaise; commande de la puissance de transmission) qui constitue en fait une information de puissance requise par le réseau et permettant au téléphone mobile TP d'ajuster la puissance d'émission de l'étage amplificateur de puissance, pour se conformer à cette information de puissance, comme on va maintenant le décrire plus en détail.

A cet égard, si l'on se réfère de nouveau plus particulièrement à la figure 1, on voit que le bloc de traitement en bande de base BB, comporte, outre l'étage de traitement ETNR, un étage de traitement d'émission ETNE qui effectue, de façon classique, notamment les traitements de codage de source, d'étalement des symboles, de modulation, pour délivrer les deux flux I et Q à une chaîne d'émission CHM de structure classique.

Cette chaîne d'émission CHM comporte notamment, en tête des convertisseurs numériques/analogiques, ainsi que des mélangeurs permettant d'effectuer une transposition de fréquence à la fréquence d'émission. Là encore, les signaux de transposition sont délivrés par une boucle à verrouillage de phase (non représentée ici à des fins de simplification) contrôlée également par des moyens de contrôle automatique de fréquence incorporés dans l'étage ETNE.

L'étage d'amplification de puissance du téléphone mobile TP comporte ici un moyen d'amplification à gain variable MAGV dont l'entrée est reliée à la sortie de la chaîne d'émission CHM. La sortie du moyen d'amplification MAGV est reliée à l'antenne AMT par l'intermédiaire d'un duplexeur DUP.

Le moyen d'amplification MAGV est alimenté par une alimentation ALM, de préférence une alimentation à découpage, qui délivre, en réponse à un signal de commande CTPAL délivré par les moyens ETNE la tension d'alimentation Valim du moyen d'amplification MAGV, à partir de la tension de batterie du téléphone VBAT.

Par ailleurs, les moyens de traitements ETNE délivrent un signal de commande du gain CTPG permettant de régler la valeur du gain du moyen d'amplification.

Le principe de fonctionnement de l'étage d'amplification de puissance selon l'invention est alors le suivant :
au rythme de réception des informations de puissance TPC, l'étage ETNE délivre le signal CTPG pour ajuster la valeur du gain en fonction de la nouvelle puissance d'émission requise. Par ailleurs, l'étage ETNE comporte une mémoire MM1 stockant une table fournissant pour chaque valeur de la puissance d'émission requise et du gain, une valeur de la tension d'alimentation Valim. En conséquence, l'étage ETNE délivre le signal de commande CTPAL à l'alimentation à découpage ALM de façon à ce que celle-ci délivre cette tension Valim compte tenu de la tension de la batterie et ce dans le but de minimiser le back-off du moyen d'amplification.

On va maintenant décrire en se référant plus particulièrement aux figures 2 et 4 à 11, un mode de réalisation de l'invention dans lequel le moyen d'amplification à gain variable MAGV est obtenu par deux amplificateurs de puissance à gain fixe PA1 et PA2, individuellement sélectionnables. Sur la figure 2, on a représenté par un seul triangle, chaque amplificateur de puissance. Bien entendu, l'homme du métier sait qu'en réalité un amplificateur de puissance est réalisé par un préamplificateur et un étage de puissance.

L'étage d'amplification de puissance du téléphone mobile TP comporte ici deux amplificateurs de puissance PA1 et PA2, de structure classique et connue en soi, dont les entrées respectives sont reliées aux sorties de moyens de sélection MSW formées ici par un duplexeur contrôlé par un signal de sélection CTS élaboré et délivré par l'étage de traitement ETNE. L'entrée du duplexeur MSW est reliée à la sortie de la chaîne d'émission CHM. Les sorties respectives des deux amplificateurs P1 et PA2 sont reliées à l'antenne ANT par l'intermédiaire du duplexeur DUP.

Enfin, chaque amplificateur PA1, PA2 est commandé par un signal de commande CTPA1, CTPA2 permettant d'inhiber son fonctionnement. Ces deux signaux CTPA 1 et CTPA2 sont également délivrés par l'étage de traitement ETNE.

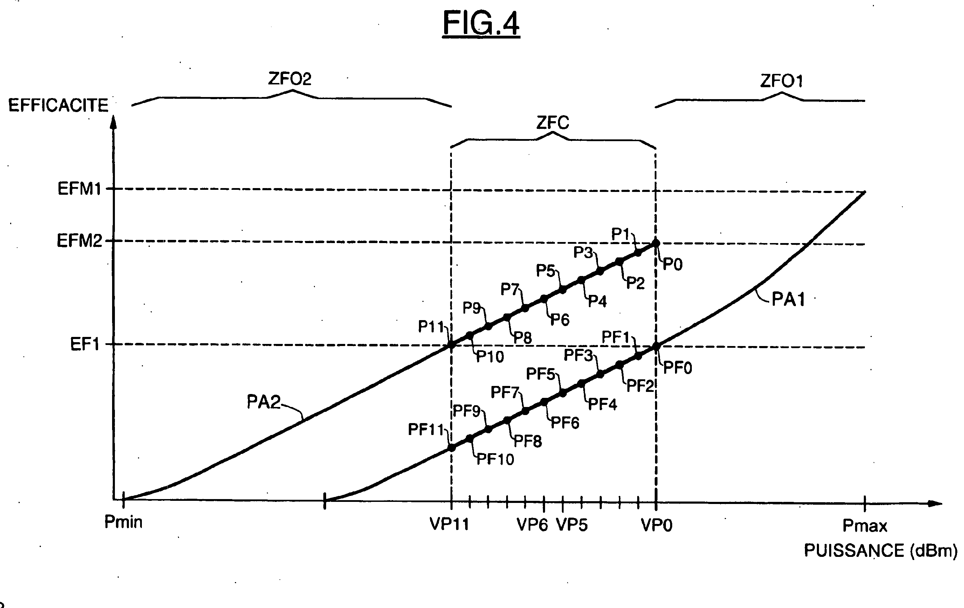

Comme illustré sur la figure 4, chaque amplificateur de puissance possède une zone de fonctionnement spécifique et une zone de fonctionnement commune avec l'autre amplificateur de puissance.

Ainsi, à titre d'exemple, l'amplificateur PA1 présente une zone de fonctionnement spécifique ZFO1, pour laquelle l'efficacité (rendement) de l'amplificateur croît depuis une valeur EF1 jusqu'à une valeur EFM1, par exemple dans une zone de puissance comprise entre VP0 dBm et Pmax.. Pour des puissances inférieures à VP0 dBm l'efficacité de l'amplificateur PAI décroît depuis la valeur EF1

De même, la zone de fonctionnement spécifique ZFO2 de l'amplificateur PA2 s'étend de Pmin jusqu'à VP11 dBm. L'efficacité de l'amplificateur PA2 continue de croître ensuite pour atteindre la valeur EFM2 à VP0 dBm.

Les deux amplificateurs de puissance couvrent donc ensemble la totalité de la plage de puissance, allant de Pmin à Pmax. Ils ont des gains fixes différents.

Ils possèdent par ailleurs une zone de fonctionnement commune ZFC dont on a fixé ici les limites à VP11 dBm et VP0 dBm.

Les limites de cette zone de fonctionnement commune ont été définies de façon à ce que l'amplificateur qui présente une efficacité moindre dans cette zone, ait tout de même une efficacité acceptable.

Chaque point de la plage de puissances est associé à l'un des amplificateurs en fonction d'un critère d'attribution qui prend ici en compte l'efficacité en combinaison avec la nécessité de commuter d'amplificateur dans des conditions convenables pour la transmission des données. Ainsi, tous les points de fonctionnement compris entre Pmin et VP11 dBm sont associés à l'amplificateur PA2. De même, tous les points de fonctionnement compris entre VP0 dBm et Pmax sont associés à l'amplificateur PA1.

Dans l'exemple décrit, on voit que pour toute la zone commune, c'est l'amplificateur PA2 qui présente la meilleure efficacité. Cependant, si la puissance requise continue à augmenter, il conviendra alors de commuter sur l'amplificateur PA1.C'est la raison pour laquelle, on définit dans cette zone commune un point de fonctionnement au delà duquel il conviendra de prendre la décision de commuter. Ce point est par exemple le point P6 correspondant à la valeur de puissance VP6.

Ainsi, dans la zone de fonctionnement commune, tous les points de fonctionnement compris entre VP11 dBm et VP6 dBm sont associés à l'amplificateur PA2. Par contre, tous les points de fonctionnement compris entre VP5 dBm et Pmax sont associés à l'amplificateur PA1.

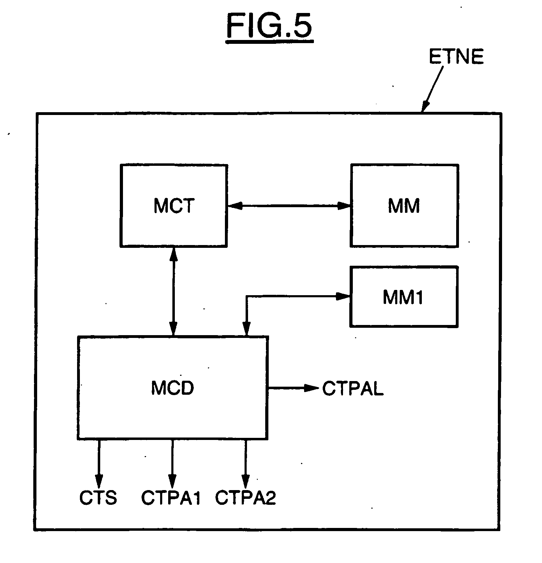

Cette table de correspondance entre un point de fonctionnement et un amplificateur de puissance est stockée dans une mémoire MM de l'étage ETNE (figure 5).

Outre les moyens qui ont été déjà évoqués plus haut, l'étage ETNE comporte par ailleurs des moyens de contrôle MCT et des moyens de commande MCD. Ces moyens sont par exemple réalisés de façon logicielle au sein d'un microprocesseur.

Les informations de puissance TPC (figure 6) sont reçues au sein de chaque intervalle temporel SLi, et la variation de puissance entre deux informations de puissance successives est par exemple de 1 dBm. Tant que l'information de puissance TPC reçue par l'étage de traitement ETNE se situe dans la zone de fonctionnement spécifique de l'amplificateur PA1 (que l'on suppose ici sélectionné) et à l'extérieur de la zone de fonctionnement commune ZFC, il n'est nul besoin de changer d'amplificateur de puissance et la puissance d'émission peut continuer à être ajustée avec les informations TPC en utilisant l'amplificateur PA1 sélectionné.

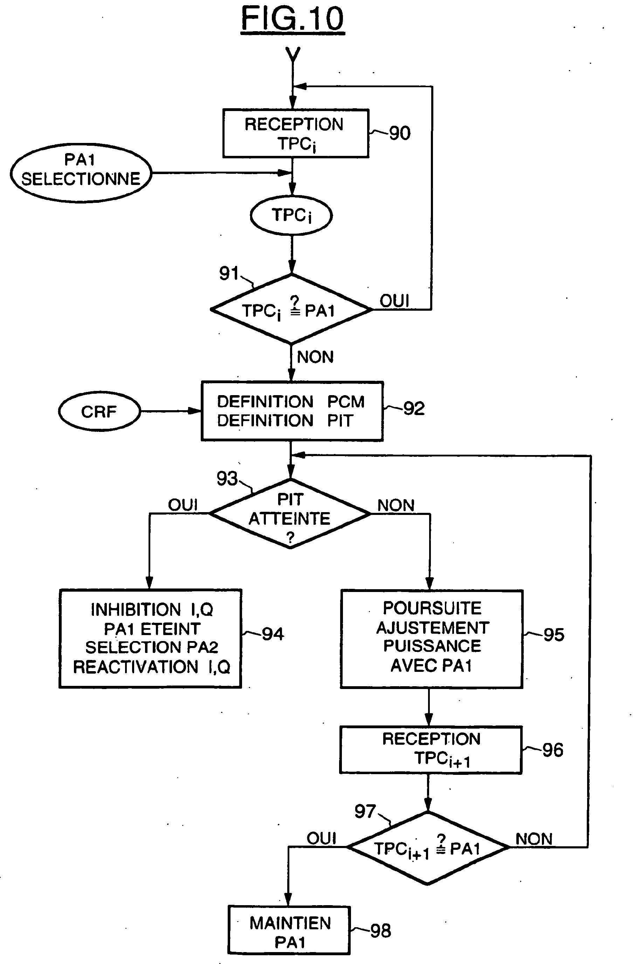

Lorsque la puissance demandée par le réseau décroît et correspond à un point de fonctionnement situé dans la zone de fonctionnement commune ZFC, les moyens de contrôle vont, d'une façon générale, vérifier si cette information de puissance TPCi reçue (étape 90, figure 10) correspond à l'amplificateur actuellement sélectionné (étape 91), c'est-à-dire à l'amplificateur PA1. Si tel est le cas, il n'y a pas de modification de sélection de l'amplificateur de puissance. C'est le cas par exemple pour les points de fonctionnement PF0 à PF5.

Par contre, si une information de puissance TPCi reçue dans l'étape 90 (figure 10) correspond au point de fonctionnement PF6, il convient alors de commuter l'amplificateur de puissance et de sélectionner l'amplificateur PA2.

A cet égard, les moyens de contrôle MCT vont alors définir une plage temporelle de commutation PCM (étape 92) s'étendant depuis l'instant de réception de ladite information de puissance TPCi (correspondant au point de fonctionnement PF6), sur une durée prédéterminée compatible avec les limites de ladite zone commune ZFC.

Les moyens de contrôle MCT vont également définir en fonction d'un critère prédéterminé d'interruption d'émission CRF, dont on reviendra plus en détail ci-après sur le contenu, les limites temporelles d'une plage temporelle d'interruption PIT se situant dans ladite plage de commutation PCM.

En d'autres termes, les moyens de contrôle vont définir, à partir du point PF5, une plage de commutation à l'intérieur de laquelle il sera possible de changer d'amplificateur de puissance tout en continuant, avant ce point de commutation, d'ajuster la puissance d'émission en utilisant l'amplificateur actuellement sélectionné, c'est-à-dire l'amplificateur PA1, bien que celui-ci présente une efficacité moindre que celle de l'amplificateur PA2. La limite de la plage de commutation sera par exemple ici celle définie par le point PF10. En effet, entre les points PF6 et PF10, l'efficacité de l'amplificateur PA1 reste acceptable, alors qu'au-delà du point PF10 elle est jugée trop faible. En terme d'intervalles ("slots"), la durée de la plage de commutation correspond ici à quatre intervalles.

Bien entendu, l'homme du métier pourra ajuster la longueur de la plage de commutation en fonction des diverses courbes d'efficacité des amplificateurs dans la zone de fonctionnement commune. D'une façon générale, on pourra choisir une plage de commutation comprise entre environ quatre intervalles et huit intervalles.

Si maintenant on suppose que c'est l'amplificateur PA2 qui est sélectionné, et que la puissance demandée par le réseau croît et correspond à un point de fonctionnement situé dans la zone de fonctionnement commune ZFC, les moyens de contrôle vont vérifier si cette information de puissance TPCi reçue (étape 90, figure 10) correspond à l'amplificateur actuellement sélectionné (étape 91), c'est-à-dire à l'amplificateur PA2. Si tel est le cas, il n'y a pas de modification de sélection de l'amplificateur de puissance. C'est le cas par exemple pour les points de fonctionnement P11 à P6.

Par contre, si une information de puissance TPCi reçue dans l'étape 90 (figure 10) correspond au point de fonctionnement P5, il convient alors de commuter l'amplificateur de puissance et de sélectionner l'amplificateur PA1.

A cet égard, les moyens de contrôle MCT vont définir la plage temporelle de commutation PCM (étape 92) s'étendant depuis l'instant de réception de ladite information de puissance TPCi (correspondant au point de fonctionnement P5), sur une durée prédéterminée compatible avec les limites de ladite zone commune ZFC.

Les moyens de contrôle MCT vont également définir en fonction du critère prédéterminé d'interruption d'émission CRF, les limites temporelles de la plage temporelle d'interruption PIT se situant dans ladite plage de commutation PCM.

En d'autres termes, les moyens de contrôle vont définir, à partir du point P5, une plage de commutation à l'intérieur de laquelle il sera possible de changer d'amplificateur de puissance tout en continuant, avant ce point de commutation, d'ajuster la puissance d'émission en utilisant l'amplificateur actuellement sélectionné, c'est-à-dire l'amplificateur PA2. La limite de la plage de commutation sera par exemple ici celle définie par le point P1.

Une fois cette plage de commutation PCM délimitée, les moyens de contrôle vont définir en fonction du critère d'interruption de transmission, la plage temporelle d'interruption PIT qui va correspondre aux meilleurs moments pour changer d'amplificateur, ce changement nécessitant au préalable un arrêt de l'émission du téléphone.

Revenons maintenant plus particulièrement à la figure 10 pour la poursuite de l'algorithme de commutation (on suppose à nouveau que l'amplificateur PA1 était initialement sélectionné).

Les moyens de commande vont détecter dans l'étape 93 l'occurrence de la plage d'interruption PIT. Tant que cette plage d'interruption n'est pas atteinte, les moyens de contrôle vont autoriser la poursuite (étape 95) de l'ajustement de la puissance d'émission avec l'amplificateur actuellement sélectionné, c'est-à-dire ici l'amplificateur PA1, et ce éventuellement à partir de nouvelles informations de puissance TPC reçues. Ainsi, si à titre d'exemple, la plage temporelle d'interruption PIT doit se produire à un instant correspondant à un point de fonctionnement situé entre les points PF7 et PF8, la puissance d'émission va continuer à être ajustée jusqu'à l'occurrence de cette plage d'interruption PIT en utilisant les informations TPC correspondant aux points PF6 et PF7 (étapes 96 et 97).

Ceci étant, il convient de noter qu'à chaque réception d'une nouvelle information de puissance TPCi+1, les moyens de commande vérifient si la nouvelle information de puissance reçue correspond à l'amplificateur actuellement sélectionné, c'est-à-dire l'amplificateur PA1 (étape 97). Si tel était le cas (par exemple si l'information de puissance reçue immédiatement après celle associée au point PF6 correspond au point de fonctionnement PF5), il n'y a plus lieu de changer d'amplificateur de puissance et l'amplificateur de puissance actuellement sélectionné PA1 est maintenu sélectionné (étape 98).

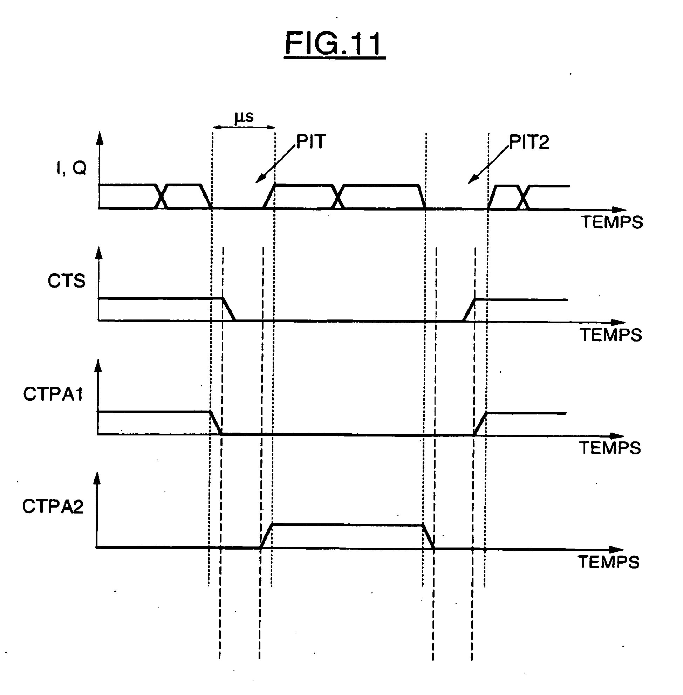

Lorsque les moyens de commande détectent l'occurrence de la plage temporelle d'interruption, ils initient alors le processus de commutation (étape 94) illustré sur la figure 11.

D'une façon générale, comme illustré sur cette figure 11, les moyens de commande vont inhiber l'émission (I, Q) pendant toute la durée de la plage d'interruption PIT. Puis, ils vont délivrer aux moyens de sélection MSW, l'information de sélection CTS correspondant à l'amplificateur de puissance associé à la dernière information de puissance reçue, puis ils vont réactiver l'émission avec le nouvel amplificateur sélectionné.

Bien que différents modes de commutation peuvent être envisagés pour commuter les deux amplificateurs de puissance, celui décrit en référence à la figure 11 permet de minimiser les perturbations et évite notamment que les deux amplificateurs soient pendant un court instant tous deux opérationnels. Ainsi, le signal de commande CTPA1 de l'amplificateur PA1 est mis tout d'abord à 0 (amplificateur PA1 désactivé) une fois que l'émission a été inhibée. Puis, le signal de sélection CTS est délivré aux moyens de sélection MSW, qui relient alors la sortie de la chaîne d'émission CHM à l'entrée de l'amplificateur PA2.

Puis, le signal de commande CTPA2 est mis à 1, activant ainsi le fonctionnement de l'amplificateur PA2. Puis, lorsque cet amplificateur PA2 est activé, les moyens de commande réactivent l'émission I, Q.

Ce chronogramme temporel se reproduit éventuellement ultérieurement au cours d'une autre plage temporelle d'interruption PIT2 dans le cas où il conviendrait de recommuter sur l'amplificateur PA1.

La durée de la plage temporelle d'interruption PIT est également choisie de façon à minimiser les risques de perturbations de la transmission tout en autorisant une commutation efficace et nette des amplificateurs. A titre d'exemple, on pourra choisir une durée de l'ordre de quelques fragments ("chips"), par exemple deux à quatre fragments, ce qui correspond à une durée pouvant aller jusqu'à une microseconde environ.

On va maintenant revenir plus en détail sur l'élaboration du critère prédéterminé d'interruption d'émission CRF.

D'une façon générale, le critère d'interruption d'émission CRF comporte le choix d'au moins un évènement particulier prédéterminé pouvant se produire au cours d'une émission et ayant un impact prédéterminé sur le taux d'erreur binaire en cas d'interruption d'émission lors de l'occurrence de cet évènement particulier. On choisira ainsi de préférence un évènement particulier minimisant le taux d'erreur binaire en cas d'interruption d'émission lors de l'occurrence de cet évènement particulier. Ainsi, si cet évènement particulier est détecté à l'intérieur de la plage de commutation PCM, les moyens de contrôle placent alors ladite plage temporelle d'interruption PIT lors de l'occurrence de cet évènement particulier.

Selon un mode de mise en oeuvre de l'invention, le critère d'interruption d'émission comporte avantageusement le choix d'un groupe de plusieurs évènements particuliers prédéterminés pouvant se produire au cours d'une émission, et l'ordonnancement de ces évènements particuliers selon un ordre de priorité prédéterminé en fonction de leurs impacts respectifs sur le taux d'erreur binaire en cas d'interruption d'émission lors de l'occurrence de ces évènements particuliers. Ainsi, l'évènement particulier ayant la priorité la plus élevée conduira au taux d'erreur binaire le plus faible en cas d'interruption d'émission lors de l'occurrence de cet évènement particulier de priorité la plus élevée. L'évènement particulier ayant la priorité la moins élevée conduira à un taux d'erreur binaire plus élevé.

Les moyens de contrôle vont alors analyser les caractéristiques de l'émission en considérant ledit ordre de priorité, de façon à détecter la présence éventuelle pendant ladite plage de commutation PCM d'un évènement particulier prédéterminé dudit groupe. Et, les moyens de contrôle vont alors placer ladite plage temporelle d'interruption PIT lors de l'occurrence du premier évènement particulier ainsi détecté dans l'ordre de priorité.

On va maintenant se référer plus particulièrement aux figures 6 à 8, pour illustrer les évènements particuliers permettant de définir ladite plage temporelle d'interruption PIT.

La figure 6 illustre schématiquement une trame d'émission TRE au sein de laquelle sont émises les informations émanant du téléphone à destination de la station de base (sens montant : "Uplink") dans un mode de fonctionnement normal. Plus précisément, d'une façon analogue à la trame de réception TRR (figure 5), la trame d'émission TRE est également subdivisée en quinze intervalles SLi. Au sein de chaque intervalle Sli sont véhiculés en parallèle le canal de données DPDCH et le canal de contrôle DPCCH. Plus précisément, les indications de contrôle véhiculées comportent un mot PLT relatif à un signal pilote, un mot TFCI correspondant à un indicateur de combinaison de format de transport, un mot FBI correspondant à une information en retour et un mot TPC correspondant à une information de puissance émise. L'homme du métier pourra également se reporter à la spécification 3G TS 25.211 précitée pour plus de détails concernant la structure d'une trame d'émission TRE.

Par ailleurs, les données contenues dans le canal de données DPDCH peuvent être étalées avec un facteur d'étalement ("spreading factor") variable. Ce facteur d'étalement peut ainsi varier de 4 à 256 selon la qualité de service requise.

Outre le mode d'émission normal, les informations transmises peuvent l'être au sein d'un mode d'émission dit "comprimé" ("compressed mode" en langue anglaise). Dans un tel mode d'émission comprimé, il est prévu, comme illustré schématiquement sur la figure 7, des intervalles vides TGP séparant des intervalles d'émission SLj et SLk et au cours desquels aucune information n'est émise. Pour plus de détails sur le mode de transmission comprimé, l'homme du métier pourra se référer à la spécification technique 3G TS 25.212 émanant du même organisme (3 GPP) que celui précédemment mentionné.

Outre le mode d'émission comprimé, le téléphone portable peut également, dans certaines circonstances, dialoguer avec la station de base dans un mode d'émission dit "hâché" ("gated mode" en langue anglaise). Dans ce mode d'émission hâché, l'émission doit être interrompue au cours de certains intervalles de chaque trame. Le nombre d'intervalles au cours desquels l'émission doit être interrompue, ainsi que leur position dans la trame, dépendent du taux de hâchage. Un tel mode d'émission hâchée est également connu de l'homme du métier. Pour plus de détails, celui-ci pourra néanmoins se référer à la spécification 3G TR 25.840, de l'Organisme précédemment mentionné (3GPP).

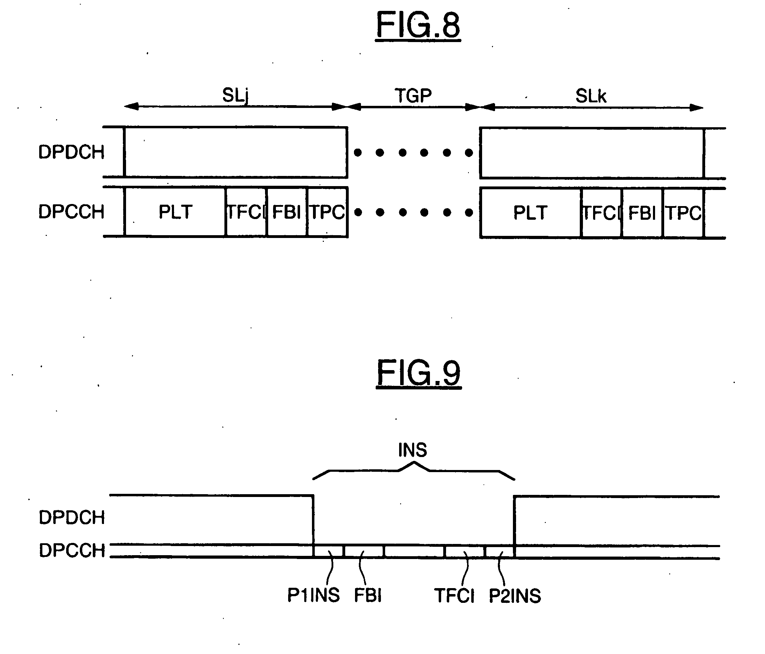

Le téléphone portable peut également dialoguer avec la station de base dans un mode de transmission discontinu ("DTX mode" en langue anglaise). Un tel mode de transmission est également bien connu de l'homme du métier. Il se caractérise notamment, comme illustré sur la figure 8, par des intervalles de silence INS au cours desquels aucune donnée n'est émise sur le canal de donnée DPDCH en direction de la station de base. Par contre, le canal de contrôle DPCCH continue à être transmis et peut comporter notamment les mots FBI et TFCI.

Le groupe d'évènements particuliers est alors constitué, par ordre de priorité décroissant :
- des intervalles vides TGP lors d'un mode d'émission comprimé,
- des intervalles au cours desquels l'émission peut être interrompue dans un mode d'émission hâché,
- des parties P1INS ou P2INS (figure 8) des intervalles de silence INS dans un mode de transmission discontinu, au cours desquelles on n'émet ni informations en retour FBI, ni indicateurs de combinaison de format de transport TFCI,
- des parties des intervalles au cours desquelles on émet des données ayant un facteur d'étalement élevé (par exemple 128 ou 256) sans émettre ni informations en retour FBI, ni indicateurs de combinaison de format de transport TFCI,
- des parties des intervalles au cours desquelles on émet des données ayant un facteur d'étalement faible sans émettre ni informations en retour FBI, ni indicateurs de combinaison de format de transport TFCI,
- des parties des intervalles au cours desquelles on émet des informations en retour FBI ou des indicateurs de combinaison de format de transport TFCI.

En d'autres termes, les moyens de contrôle vont tout d'abord détecter si la plage de commutation PCM va contenir au moins un intervalle vide TGP en mode d'émission comprimé. Si tel est le cas, les moyens de contrôle vont placer la plage d'interruption de transmission PIT dans cet intervalle vide.

Si tel n'est pas le cas, les moyens de contrôle vont détecter la présence éventuelle d'un mode d'émission hâché et vont alors placer la plage d'interruption de transmission PIT dans l'un des intervalles au cours desquels l'émission peut être interrompue.

Si tel n'est pas le cas, les moyens de contrôle vont détecter la présence éventuelle d'un mode de transmission discontinu et vont alors placer la plage d'interruption de transmission PIT au cours d'une partie P1INS ou P2INS (figure 8).

Si cela n'est pas possible, les moyens de contrôle vont alors détecter la présence éventuelle de parties d'intervalles au cours desquelles on émet les données avec un facteur d'étalement élevé, mais au cours desquelles on n'émet ni informations en retour FBI, ni indicateurs de combinaison de format de transport TFCI. Si cette détection est positive, les moyens de contrôle vont placer la plage d'interruption de transmission au cours de ces parties d'intervalles.

Si la détection est négative, les moyens de contrôle vont essayer de détecter des parties d'intervalles au cours desquelles on émet des données ayant un facteur d'étalement faible, mais au cours desquelles on n'émet toujours pas d'informations en retour FBI, ni d'indicateurs de combinaison de format de transport TFCI. Les moyens de contrôle placeront alors la plage d'interruption de transmission PIT au cours de ces parties d'intervalles.

Et, si enfin, aucune des détections préalables n'a été positive, les moyens de contrôle vont alors placer la plage d'interruption de transmission PIT dans les parties des intervalles au cours desquelles on émet des informations en retour FBI ou des indicateurs de combinaison de format de transport TFCI.

Bien entendu, tout ce qui a été décrit ci-avant pour deux amplificateurs, s'applique si plus de deux amplificateurs sont utilisés pour autant qu'ils présentent des zones de fonctionnement se chevauchant au moins deux à deux.

Si l'on se réfère maintenant à nouveau plus particulièrement à la figure 2 et à la figure 5, on voit que quel que soit l'amplificateur qui a été sélectionné, les moyens de commande MCD de l'étage ETNE vont, à partir du contenu de la mémoire MM1 délivrer à l'alimentation à découpage ALM le signal CTPAL de façon à régler la tension d'alimentation Valim de l'amplificateur sélectionné.

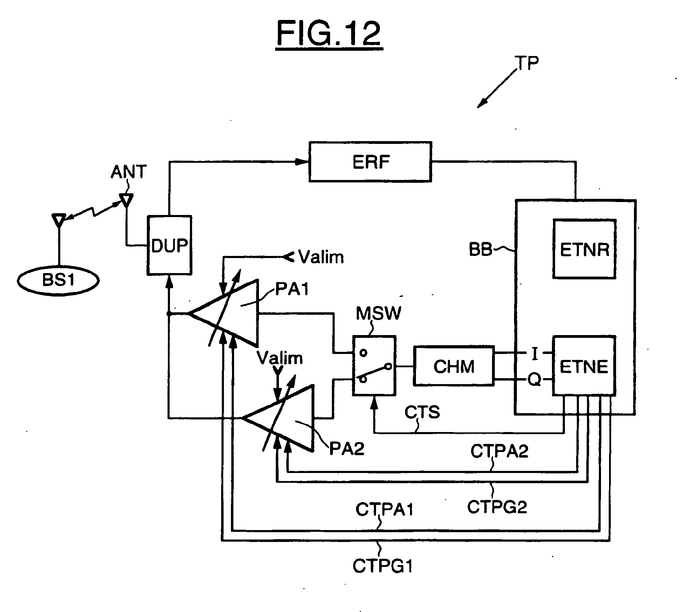

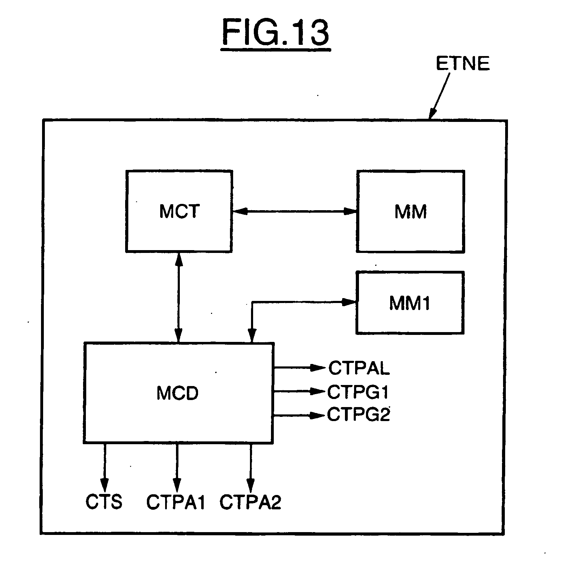

Dans le mode de réalisation illustré sur les figures 12 et 13, les deux amplificateurs PA1 et PA2 sont cette fois-ci à gain variable. Le principe de sélection et de commutation de ces deux amplificateurs est identique à celui qui vient d'être décrit en référence aux figures précédentes. Par contre, dans ce mode de réalisation, les moyens de commande MCD délivrent en outre à l'amplificateur sélectionné, le signal de commande du gain CTPG1 (pour l'amplificateur PA1) ou CTPG2 (pour l'amplificateur PA2).

Bien entendu, outre le signal de commande du gain délivré à l'amplificateur sélectionné, les moyens de commande MCLD délivrent toujours à l'alimentation à découpage, le signal de commande correspondant de façon à régler la tension d'alimentation de l'amplificateur sélectionné pour minimiser le back-off de cet amplificateur.

L'invention n'est pas limitée aux modes de réalisation et de mise en oeuvre qui viennent d'être décrits mais en embrasse toutes les variantes. Ainsi, il est particulièrement avantageux de contrôler également la précision de la puissance de sortie. A cet égard, si l'on se réfère de nouveau à la figure 1, sur laquelle les moyens supplémentaires de ce mode de réalisation ont été représentés en tiretés, on voit qu'il est prévu un bloc de contrôle MCPS, recevant d'une part le niveau de la puissance de sortie délivrée par l'amplificateur MAGV et d'autre part le signal de commande CTPG issu de la consigne de puissance reçue par le terminal, et délivrant après comparaison des deux entrées, le signal de commande du gain de l'amplificateur MAGV.

La présence d'un tel bloc de contrôle est également envisageable dans les modes de réalisation illustrés sur les figures 2 et 12. Dans le mode de réalisation de la figure 2, le signal de commande du gain serait alors délivré par exemple à un préamplificateur à gain variable.

## Revendications

1. Procédé de contrôle de la puissance d'émission d'un terminal distant, tel qu'un téléphone mobile cellulaire, dans une plage de puissances prédéterminées, dans lequel on ajuste la puissance d'émission en fonction d'informations de puissance reçues par le terminal, **caractérisé par le fait qu'**on équipe le terminal avec un moyen d'amplification à gain variable (MAGV) capable de couvrir ladite plage de puissances, et **par le fait qu'**on règle la valeur du gain et de la tension d'alimentation du moyen d'amplification en fonction desdites informations de puissance (TPC).

2. Procédé selon la revendication 1, **caractérisé par le fait que** le moyen d'amplification comprend au moins deux amplificateurs de puissance (PA1, PA2) individuellement sélectionnables capables de couvrir ensemble la totalité de la plage de puissances, possédant respectivement deux zones de fonctionnement spécifique différentes et une zone commune de fonctionnement (ZFC), **par le fait qu'**on associe l'un des amplificateurs à chaque point de la plage de puissance, **par le fait qu'**en présence d'une information de puissance reçue (TPC) correspondant à un point de la zone commune, on vérifie si cette information de puissance correspond à l'amplificateur actuellement sélectionné, et dans le cas contraire on sélectionne l'amplificateur de puissance associé à ladite information de puissance, et **par le fait qu'**on règle la valeur de la tension d'alimentation de l'amplificateur sélectionné en fonction de ladite information de puissance.

3. Procédé selon la revendication 2, **caractérisé par le fait que** l'un au moins des amplificateurs est à gain variable, et **par le fait qu'**on règle la valeur du gain de l'amplificateur sélectionné en fonction de ladite information de puissance.

4. Procédé selon la revendication 1, **caractérisé par le fait que** le moyen d'amplification comprend au moins deux amplificateurs de puissance (PA1, PA2) individuellement sélectionnables capables de couvrir ensemble la totalité de la plage de puissances, possédant respectivement deux zones de fonctionnement spécifiques différentes et une zone commune de fonctionnement (ZFC), **par le fait qu'**on associe l'un des amplificateurs à chaque point de la plage de puissance, **par le fait qu'**en présence d'une information de puissance reçue (TPC) correspondant à un point de la zone commune, on vérifie si cette information de puissance correspond à l'amplificateur actuellement sélectionné, et dans le cas contraire on définit une plage temporelle de commutation (PCM) s'étendant depuis l'instant de réception de ladite information de puissance sur une durée prédéterminée compatible avec les limites de ladite zone commune, on définit en fonction d'un critère prédéterminé d'interruption d'émission (CRF), les limites temporelles d'une plage temporelle d'interruption (PIT) se situant dans ladite plage de commutation, on continue, éventuellement à partir de nouvelles informations de puissance reçues, à ajuster la puissance d'émission avec l'amplificateur actuellement sélectionné jusqu'à l'occurrence de ladite plage d'interruption, puis si la dernière information de puissance reçue avant l'occurrence de ladite plage d'interruption ne correspond toujours pas à l'amplificateur actuellement sélectionné, on inhibe l'émission pendant ladite plage d'interruption, on sélectionne l'amplificateur de puissance associé à ladite dernière information de puissance, et on réactive l'émission avec le nouvel amplificateur sélectionné.

5. Procédé selon la revendication 4, **caractérisé par le fait que** l'un au moins des amplificateurs est à gain variable, et **par le fait qu'**on règle la valeur du gain de l'amplificateur sélectionné en fonction des informations de puissance.

6. Procédé selon la revendication 4 ou 5, **caractérisé par le fait que** les informations émises sont formées de fragments et sont véhiculées au sein de trames successives subdivisées chacune en un nombre prédéterminé d'intervalles (SLi), **par le fait que** la durée de la plage de commutation (PCM) est de l'ordre de quelques intervalles, par exemple 4 à 8 intervalles, et **par le fait que** la durée de la plage temporelle d'interruption (PIT) est de l'ordre de quelques fragments, par exemple 2 à 4 fragments.

7. Procédé selon l'une des revendications 4 à 6, **caractérisé par le fait que** le critère d'interruption d'émission (CRF) comporte le choix d'au moins un évènement particulier prédéterminé pouvant se produire au cours d'une émission et ayant un impact prédéterminé sur le taux d'erreur binaire en cas d'interruption d'émission lors de l'occurrence de cet évènement particulier, **par le fait qu'**on analyse les caractéristiques de l'émission de façon à détecter la présence éventuelle de cet évènement particulier prédéterminé à l'intérieur de ladite plage de commutation, et **par le fait que** si cette présence est effective, on place ladite plage temporelle d'interruption (PIT) lors de l'occurrence de cet évènement particulier.

8. Procédé selon la revendication 7, **caractérisé par le fait que** le critère d'interruption d'émission comporte le choix d'un groupe de plusieurs évènements particuliers prédéterminés pouvant se produire au cours d'une émission, et l'ordonnancement de ces évènements particuliers selon un ordre de priorité prédéterminé en fonction de leur impacts respectifs sur le taux d'erreur binaire en cas d'interruption d'émission lors de l'occurrence de ces évènements particuliers, **par le fait qu'**on analyse les caractéristiques de l'émission en considérant ledit ordre de priorité de façon à détecter la présence éventuelle pendant ladite plage de commutation (PCM), d'un évènement particulier prédéterminé dudit groupe, et **par le fait qu'**on place ladite plage temporelle d'interruption (PIT) lors de l'occurrence du premier évènement particulier ainsi détecté dans l'ordre de priorité.

9. Procédé selon la revendication 8, **caractérisé par le fait que** les informations émises comportent des données et des indications de contrôle, et sont véhiculées au sein de trames successives subdivisées chacune en un nombre prédéterminé d'intervalles, **par le fait que** les indications de contrôle comportent des informations en retour (FBI) et des indicateurs de combinaison de format de transport (TFCI), et **par le fait que** le groupe d'évènements particuliers est constitué, par ordre de priorité décroissant :
- des intervalles vides (TPG) lors d'un mode d'émission comprimé,
- des intervalles au cours desquels l'émission doit être interrompue dans un mode d'émission hâché,
- des parties (P1INS, P2INS) des intervalles de silence (INS) dans un mode de transmission discontinu, au cours desquelles on n'émet ni informations en retour (FBI) ni indicateurs de combinaison de format de transport (TFCI),
- des parties des intervalles au cours desquelles on émet des données ayant un facteur d'étalement élevé sans émettre ni informations en retour (FBI) ni indicateurs de combinaison de format de transport (TFCI),
- des parties des intervalles au cours desquelles on émet des données ayant un facteur d'étalement faible sans émettre ni informations en retour (FBI) ni indicateurs de combinaison de format de transport (TFCI),
- des parties des intervalles au cours desquelles on émet des informations en retour (FBI) ou des indicateurs de combinaison de format de transport (TFCI).

10. Terminal distant d'un système de communication sans fil, comprenant une chaîne de réception, une chaîne d'émission, un étage d'amplification de puissance connecté entre la chaîne d'émission et l'antenne, et un étage de traitement apte à ajuster la puissance de sortie de l'étage d'amplification en fonction d'informations de puissance régulièrement reçues par la chaîne de réception, **caractérisé par le fait que** l'étage d'amplification de puissance comporte un moyen d'amplification à gain variable (MAGV) capable de couvrir ladite plage de puissances, et **par le fait que** les moyens de traitement sont aptes à régler la valeur du gain et la tension d'alimentation du moyen d'amplification en fonction desdites informations de puissance.

11. Terminal selon la revendication 10, **caractérisé par le fait que** le moyen d'amplification comporte au moins deux amplificateurs de puissance (PA1, PA2) individuellement sélectionnables capables de couvrir ensemble la totalité de la plage de puissance, possédant respectivement deux zones de fonctionnement spécifiques différentes et une zone commune de fonctionnement, **par le fait que** l'étage d'amplification de puissance comporte en outre des moyens de sélection (MWS) aptes en réponse à une information de sélection, à relier la sortie de la chaîne d'émission à l'entrée de l'amplificateur de puissance correspondant à ladite information de sélection, et **par le fait que** l'étage de traitement (ETNE) comporte :
- une table de correspondance (MM) associant l'un des amplificateurs à chaque point de la plage de puissance,
- des moyens de contrôle (MCT) aptes en présence d'une information de puissance reçue correspondant à un point de la zone commune, à vérifier si cette information de puissance correspond à l'amplificateur actuellement sélectionné, et
- des moyens de commande aptes, si cette information de puissance ne correspond pas à l'amplificateur actuellement sélectionné, à délivrer aux moyens de sélection l'information de sélection correspondant à l'amplificateur de puissance associée à cette information de puissance, et **par le fait que** les moyens de commande sont également aptes à régler la valeur de la tension d'alimentation de l'amplificateur sélectionné.

12. Terminal selon la revendication 11, **caractérisé par le fait que** l'un au moins des amplificateurs est à gain variable, et **par le fait que** les moyens de commande sont aptes à régler la valeur du gain de l'amplificateur sélectionné en fonction de ladite information de puissance.

13. Terminal selon la revendication 10, **caractérisé par le fait que** le moyen d'amplification comporte au moins deux amplificateurs de puissance (PA1, PA2) individuellement sélectionnables capables de couvrir ensemble la totalité de la plage de puissance, possédant respectivement deux zones de fonctionnement spécifique différentes et une zone commune de fonctionnement, et des moyens de sélection (MWS) aptes en réponse à une information de sélection, à relier la sortie de la chaîne d'émission à l'entrée de l'amplificateur de puissance correspondant à ladite information de sélection, et **par le fait que** l'étage de traitement (ETNE) comporte :
- une table de correspondance (MM) associant l'un des amplificateurs à chaque point de la plage de puissance,
- des moyens de contrôle (MCT) aptes en présence d'une information de puissance reçue correspondant à un point de la zone commune, à vérifier si cette information de puissance correspond à l'amplificateur actuellement sélectionné, et dans le cas contraire à définir une plage temporelle de commutation (PCM) s'étendant depuis l'instant de réception de ladite information de puissance sur une durée prédéterminée compatible avec les limites de ladite zone commune, et à définir en fonction d'un critère prédéterminé d'interruption d'émission, les limites temporelles d'une plage temporelle (PIT) d'interruption se situant dans ladite plage de commutation, et
- des moyens de commande (MCD) aptes à autoriser la poursuite, éventuellement à partir de nouvelles informations de puissance reçues, de l'ajustement de la puissance d'émission avec l'amplificateur actuellement sélectionné jusqu'à l'occurrence de ladite plage d'interruption, puis si la dernière information de puissance reçue avant l'occurrence de ladite plage d'interruption ne correspond toujours pas à l'amplificateur actuellement sélectionné, à inhiber l'émission pendant ladite plage d'interruption, à délivrer aux moyens de sélection l'information de sélection correspondant à l'amplificateur de puissance associé à ladite dernière information de puissance, et à réactiver l'émission avec le nouvel amplificateur sélectionné, et **par le fait que** les moyens de commande sont également aptes à régler la valeur de la tension d'alimentation de l'amplificateur sélectionné.

14. Terminal selon la revendication 13, **caractérisé par le fait que** l'un au moins des amplificateurs est à gain variable, et **par le fait que** les moyens de commande sont aptes à régler la valeur du gain de l'amplificateur sélectionné en fonction de ladite information de puissance.

15. Terminal selon la revendication 13 ou 14, **caractérisé par le fait que** les informations émises sont formées de fragments et sont véhiculées au sein de trames successives subdivisées chacune en un nombre prédéterminé d'intervalles, **par le fait que** la durée de la plage de commutation (PCM) est de l'ordre de quelques intervalles, par exemple 4 à 8 intervalles, et **par le fait que** la durée de la plage temporelle d'interruption (PIT) est de l'ordre de quelques fragments, par exemple 2 à 4 fragments.

16. Terminal selon l'une des revendications 13 à 15, **caractérisé par le fait que** le critère d'interruption d'émission (CRF) comporte le choix d'au moins un évènement particulier prédéterminé pouvant se produire au cours d'une émission et ayant un impact prédéterminé sur le taux d'erreur binaire en cas d'interruption d'émission lors de l'occurrence de cet évènement particulier, **par le fait que** les moyens de contrôle analysent les caractéristiques de l'émission de façon à détecter la présence éventuelle de cet évènement particulier prédéterminé à l'intérieur de ladite plage de commutation, et **par le fait que** si cette présence est effective, les moyens de contrôlent placent ladite plage temporelle d'interruption lors de l'occurrence de cet évènement particulier.

17. Terminal selon la revendication 16, **caractérisé par le fait que** le critère d'interruption d'émission comporte le choix d'un groupe de plusieurs évènements particuliers prédéterminés pouvant se produire au cours d'une émission, et l'ordonnancement de ces évènements particuliers selon un ordre de priorité prédéterminé en fonction de leur impacts respectifs sur le taux d'erreur binaire en cas d'interruption d'émission lors de l'occurrence de ces évènements particuliers **par le fait que** les moyens de contrôle analysent les caractéristiques de l'émission en considérant ledit ordre de priorité de façon à détecter la présence éventuelle pendant ladite plage de commutation d'un évènement particulier prédéterminé dudit groupe, et **par le fait que** les moyens de contrôle placent ladite plage temporelle d'interruption lors de l'occurrence du premier événement particulier ainsi détecté dans l'ordre de priorité.

18. Terminal selon la revendication 17, **caractérisé par le fait que** les informations émises comportent des données et des indications de contrôle, et sont véhiculées au sein de trames successives subdivisées chacune en un nombre prédéterminé d'intervalles, **par le fait que** les indications de contrôle comportent des informations en retour (FBI) et des indicateurs de combinaison de format de transport (TFCI), et **par le fait que** le groupe d'évènements particuliers est constitué, par ordre de priorité décroissant :
- des intervalles vides lors d'un mode d'émission comprimé,
- des intervalles au cours desquels l'émission doit être interrompue dans un mode d'émission hâché,
- des parties des intervalles de silence dans un mode de transmission discontinu, au cours desquelles on n'émet ni informations en retour (FBI) ni indicateurs de combinaison de format de transport (TFCI),
- des parties des intervalles au cours desquelles on émet des données ayant un facteur d'étalement élevé sans émettre ni informations en retour (FBI) ni indicateurs de combinaison de format de transport (TFCI),
- des parties des intervalles au cours desquelles on émet des données ayant un facteur d'étalement faible sans émettre ni informations en retour (FBI) ni indicateurs de combinaison de format de transport (TFCI),
- des parties des intervalles au cours desquelles on émet des informations en retour (FBI) ou des indicateurs de combinaison de format de transport (TFCI).

19. Terminal selon l'une des revendications 10 à 18, **caractérisé par le fait que** l'étage d'amplification de puissance comporte une alimentation à découpage, commandable et capable de délivrer ladite tension d'alimentation réglable du moyen d'amplification.

20. Terminal selon l'une des revendications 10 à 19, **caractérisé par le fait qu'**il comporte des moyens (MCPS) aptes à contrôler la puissance émise par le moyen d'amplification à gain variable à partir du signal présent en sortie du moyen d'amplification et de l'information de puissance de consigne reçue par le terminal

21. Terminal selon l'une des revendications 10 à 20, **caractérisé par le fait qu'**il est un téléphone mobile cellulaire.

## Claims

1. Process for monitoring the transmission power of a remote terminal, such as a cellular mobile telephone, in a span of predetermined powers, in which the transmission power is adjusted as a function of power information items received by the terminal, **characterized in that** the terminal is equipped with a variable-gain amplification means (MAGV) capable of covering the said span of powers, and **in that** the value of the gain and of the supply voltage of the amplification means are tuned as a function of the said power information items (TPC).

2. Process according to Claim 1, **characterized in that** the amplification means comprises at least two individually selectable power amplifiers (PA1, PA2) capable together of covering the entire span of powers, respectively possessing two different specific zones of operation and a common zone of operation (ZFC), **in that** one of the amplifiers is associated with each point of the power span, **in that** in the presence of a received power information item (TPC) corresponding to a point of the common zone, a check is made so as to verify whether this power information item corresponds to the amplifier currently selected, and in the contrary case the power amplifier associated with the said power information item is selected, and **in that** the value of the supply voltage of the selected amplifier is tuned as a function of the said power information item.

3. Process according to Claim 2, **characterized in that** one at least of the amplifiers has variable gain, and **in that** the value of the gain of the selected amplifier is tuned as a function of the said power information item.

4. Process according to Claim 1, **characterized in that** the amplification means comprises at least two individually selectable power amplifiers (PA1, PA2) capable together of covering the entire span of powers, respectively possessing two different specific zones of operation and a common zone of operation (ZFC), **in that** one of the amplifiers is associated with each point of the power span, **in that** in the presence of a received power information item (TPC) corresponding to a point of the common zone, a check is made so as to verify whether this power information item corresponds to the amplifier currently selected, and in the contrary case a switching time span (PCM) is defined, extending from the instant of reception of the said power information item over a predetermined duration compatible with the limits of the said common zone, the temporal limits of an interruption time span (PIT) lying in the said switching span are defined as a function of a predetermined criterion for interrupting transmission (CRF), adjustment of the transmission power with the amplifier currently selected is continued, possibly on the basis of new power information items received, until the occurrence of the said interruption span, then, if the last power information item received before the occurrence of the said interruption span still does not correspond to the amplifier currently selected, the transmission is disabled during the said interruption span, the power amplifier associated with the said last power information item is selected, and transmission is reactivated with the new selected amplifier.

5. Process according to Claim 4, **characterized in that** one at least of the amplifiers has variable gain, and **in that** the value of the gain of the selected amplifier is tuned as a function of the power information items.

6. Process according to Claim 4 or 5, **characterized in that** the information transmitted is formed of fragments and is conveyed within successive frames each subdivided into a predetermined number of intervals (SLi), **in that** the duration of the switching span (PCM) is of the order of a few intervals, for example 4 to 8 intervals, and **in that** the duration of the interruption time span (PIT) is of the order of a few fragments, for example 2 to 4 fragments.

7. Process according to one of Claims 4 to 6, **characterized in that** the transmission interruption criterion (CRF) comprises the choice of at least one predetermined particular event which may occur in the course of a transmission and has a predetermined impact on the binary error rate in case of interruption of transmission during the occurrence of this particular event, **in that** the characteristics of the transmission are analysed in such a way as to detect the possible presence of this predetermined particular event within the said switching span, and **in that** if this presence is effective, the said interruption time span (PIT) is placed during the occurrence of this particular event.

8. Process according to Claim 7, **characterized in that** the transmission interruption criterion comprises the choice of a group of several predetermined particular events which may occur in the course of a transmission, and the ordering of these particular events according to a predetermined order of priority as a function of their respective impacts on the binary error rate in case of interruption of transmission during the occurrence of these particular events, **in that** the characteristics of the transmission are analysed by considering the said order of priority in such a way as to detect the possible presence, during the said switching span (PCM), of a predetermined particular event of the said group, and **in that** the said interruption time span (PIT) is placed during the occurrence of the first particular event thus detected in the order of priority.

9. Process according to Claim 8, **characterized in that** the information transmitted comprises data and monitoring indications, and is conveyed within successive frames each subdivided into a predetermined number of intervals, **in that** the monitoring indications comprise feedback information (FBI) and transport format combination indicators (TFCI), and **in that** the group of particular events consists, in descending order of priority:
- of the empty intervals (TPG) during a compressed mode of transmission,
- of the intervals in the course of which the transmission has to be interrupted in a gated mode of transmission,
- of the parts (P1INS, P2INS) of the silence intervals (INS) in a discontinuous mode of transmission, in the course of which neither feedback information (FBI) nor transport format combination indicators (TFCI) are transmitted,
- of the parts of the intervals in the course of which data having a high spreading factor are transmitted without transmitting either feedback information (FBI) or transport format combination indicators (TFCI),
- of the parts of the intervals in the course of which data having a low spreading factor are transmitted without transmitting either feedback information (FBI) or transport format combination indicators (TFCI),
- of the parts of the intervals in the course of which feedback information (FBI) or transport format combination indicators (TFCI) are transmitted.

10. Remote terminal of a wireless communication system, comprising reception circuitry, transmission circuitry, a power amplification stage connected between the transmission circuitry and the antenna, and a processing stage able to adjust the output power of the amplification stage as a function of power information items received regularly by the reception circuitry, **characterized in that** the power amplification stage comprises a variable-gain amplification means (MAGV) capable of covering the said span of powers, and **in that** the processing means are able to tune the value of the gain and of the supply voltage of the amplification means as a function of the said power information items.

11. Terminal according to Claim 10, **characterized in that** the amplification means comprises at least two individually selectable power amplifiers (PA1, PA2) capable together of covering the entire power span, respectively possessing two different specific zones of operation and a common zone of operation, **in that** the power amplification stage furthermore comprises selection means (MwS) able, in response to a selection information item, to link the output of the transmission circuitry to the input of the power amplifier corresponding to the said selection information item, and **in that** the processing stage (ETNE) comprises:
- a correspondence table (MM) associating one of the amplifiers with each point of the power span,
- monitoring means (MCT) able, in the presence of a power information item received corresponding to a point of the common zone, to verify whether this power information item corresponds to the amplifier currently selected, and
- control means able, if this power information item does not correspond to the amplifier currently selected, to deliver to the selection means the selection information item corresponding to the power amplifier associated with this power information item, and **in that** the control means are also able to tune the value of the supply voltage of the selected amplifier.

12. Terminal according to Claim 11, **characterized in that** one at least of the amplifiers has variable gain, and **in that** the control means are able to tune the value of the gain of the selected amplifier as a function of the said power information item.

13. Terminal according to Claim 10, **characterized in that** the amplification means comprises at least two individually selectable power amplifiers (PA1, PA2) capable together of covering the entire power span, respectively possessing two different specific zones of operation and a common zone of operation, and selection means (MWS) able, in response to a selection information item, to link the output of the transmission circuitry to the input of the power amplifier corresponding to the said selection information item, and **in that** the processing stage (ETNE) comprises:
- a correspondence table (MM) associating one of the amplifiers with each point of the power span,
- monitoring means (MCT) able, in the presence of a power information item received corresponding to a point of the common zone, to verify whether this power information item corresponds to the amplifier currently selected, and in the contrary case to define a switching time span (PCM) extending from the instant of reception of the said power information item over a predetermined duration compatible with the limits of the said common zone, and to define, as a function of a predetermined criterion for interrupting transmission, the temporal limits of an interruption time span (PIT) lying in the said switching span, and
- control means (MCD) able to authorize the continuation, possibly on the basis of new power information items received, of the adjustment of the transmission power with the amplifier currently selected until the occurrence of the said interruption span, then, if the last power information item received before the occurrence of the said interruption span still does not correspond to the amplifier currently selected, to disable the transmission during the said interruption span, to deliver to the selection means the selection information item corresponding to the power amplifier associated with the said last power information item, and to reactivate the transmission with the new selected amplifier, and **in that** the control means are also able to tune the value of the supply voltage of the selected amplifier.

14. Terminal according to Claim 13, **characterized in that** one at least of the amplifiers has variable gain, and **in that** the control means are able to tune the value of the gain of the selected amplifier as a function of the said power information item.

15. Terminal according to Claim 13 or 14, **characterized in that** the information transmitted is formed of fragments and is conveyed within successive frames each subdivided into a predetermined number of intervals, **in that** the duration of the switching span (PCM) is of the order of a few intervals, for example 4 to 8 intervals, and **in that** the duration of the interruption time span (PIT) is of the order of a few fragments, for example 2 to 4 fragments.

16. Terminal according to one of Claims 13 to 15, **characterized in that** the transmission interruption criterion (CRF) comprises the choice of at least one predetermined particular event which may occur in the course of a transmission and has a predetermined impact on the binary error rate in case of interruption of transmission during the occurrence of this particular event, **in that** the monitoring means analyse the characteristics of the transmission in such a way as to detect the possible presence of this predetermined particular event within the said switching span, and **in that** if this presence is effective, the monitoring means place the said interruption time span during the occurrence of this particular event.

17. Terminal according to Claim 16, **characterized in that** the transmission interruption criterion comprises the choice of a group of several predetermined particular events which may occur in the course of a transmission, and the ordering of these particular events according to a predetermined order of priority as a function of their respective impacts on the binary error rate in case of interruption of transmission during the occurrence of these particular events, **in that** the monitoring means analyse the characteristics of the transmission by considering the said order of priority in such a way as to detect the possible presence, during the said switching span, of a predetermined particular event of the said group, and **in that** the monitoring means place the said interruption time span during the occurrence of the first particular event thus detected in the order of priority.

18. Terminal according to Claim 17, **characterized in that** the information transmitted comprises data and monitoring indications, and is conveyed within successive frames each subdivided into a predetermined number of intervals, **in that** the monitoring indications comprise feedback information (FBI) and transport format combination indicators (TFCI), and **in that** the group of particular events consists, in descending order of priority:
- of the empty intervals during a compressed mode of transmission,
- of the intervals in the course of which the transmission has to be interrupted in a gated mode of transmission,
- of the parts of the silence intervals in a discontinuous mode of transmission, in the course of which neither feedback information (FBI) nor transport format combination indicators (TFCI) are transmitted,
- of the parts of the intervals in the course of which data having a high spreading factor are transmitted without transmitting either feedback information (FBI) or transport format combination indicators (TFCI),
- of the parts of the intervals in the course of which data having a low spreading factor are transmitted without transmitting either feedback information (FBI) or transport format combination indicators (TFCI),
- of the parts of the intervals in the course of which feedback information (FBI) or transport format combination indicators (TFCI) are transmitted.

19. Terminal according to one of Claims 10 to 18, **characterized in that** the power amplification stage comprises a chopped supply which is controllable and capable of delivering the said tuneable supply voltage of the amplification means.

20. Terminal according to one of Claims 10 to 19, **characterized in that** it comprises means (MCPS) able to monitor the power transmitted by the variable-gain amplification means on the basis of the signal present at the output of the amplification means and of the preset power information item received by the terminal.

21. Terminal according to one of Claims 10 to 20, **characterized in that** it is a cellular mobile telephone.

## Patentansprüche

1. Verfahren zur Regelung der Sendeleistung eines fernen Terminals, wie eines zellularen Mobiltelefons, in einem Bereich von vorbestimmten Leistungen, bei dem die Sendeleistung in Abhängigkeit von Leistungsinformationen geregelt wird, die vom Terminal empfangen werden, **dadurch gekennzeichnet, dass** das Terminal mit einer Verstärkungseinrichtung mit variabler Verstärkung (MAGV) ausgestattet ist, die in der Lage ist, den Leistungsbereich abzudecken, und **dadurch**, dass der Wert der Verstärkung und der Speisespannung der Verstärkungseinrichtung in Abhängigkeit von den Leistungsinformationen (TPC) geregelt wird.

2. Verfahren nach Anspruch 1, **dadurch gekennzeichnet, dass** die Verstärkungseinrichtung mindestens zwei einzeln auswählbare Leistungsverstärker (PA1, PA2) aufweist, die in der Lage sind, zusammen die Gesamtheit des Leistungsbereichs abzudecken, die je zwei unterschiedliche spezifische Betriebszonen und eine gemeinsame Betriebszone (ZFC) aufweisen, **dadurch**, dass einer der Verstärker jedem Punkt des Leistungsbereichs zugeordnet wird, **dadurch**, dass in Gegenwart einer empfangenen Leistungsinformation (TPC) entsprechend einem Punkt der gemeinsamen Zone geprüft wird, ob diese Leistungsinformation dem gerade ausgewählten Verstärker entspricht, und im gegenteiligen Fall der der Leistungsinformation zugeordnete Leistungsverstärker ausgewählt wird, und **dadurch**, dass der Wert der Speisespannung des ausgewählten Verstärkers in Abhängigkeit von der Leistungsinformation geregelt wird.

3. Verfahren nach Anspruch 2, **dadurch gekennzeichnet, dass** mindestens einer der Verstärker eine variable Verstärkung hat, und dass der Wert der Verstärkung des ausgewählten Verstärkers in Abhängigkeit von der Leistungsinformation geregelt wird.

4. Verfahren nach Anspruch 1, **dadurch gekennzeichnet, dass** die Verstärkungseinrichtung mindestens zwei einzeln auswählbare Leistungsverstärker (PA1, PA2) aufweist, die in der Lage sind, zusammen die Gesamtheit des Leistungsbereichs abzudecken, die je zwei unterschiedliche spezifische Betriebszonen und eine gemeinsame Betriebszone (ZFC) aufweisen, **dadurch**, dass einer der Verstärker jedem Punkt des Leistungsbereichs zugeordnet wird, **dadurch**, dass in Gegenwart einer empfangenen Leistungsinformation (TPC) entsprechend einem Punkt der gemeinsamen Zone geprüft wird, ob diese Leistungsinformation dem gerade ausgewählten Verstärker entspricht, und im gegenteiligen Fall ein Schalt-Zeitbereich (PCM) definiert wird, der sich vom Empfangszeitpunkt der Leistungsinformation über eine vorbestimmte Dauer erstreckt, die mit den Grenzen der gemeinsamen Zone kompatibel ist, in Abhängigkeit von einem vorbestimmten Sendeunterbrechungskriterium (CRF) die zeitlichen Grenzen eines Unterbrechungs-Zeitbereichs (PIT) definiert werden, der sich im Schaltbereich befindet, ggf. ausgehend von neuen empfangenen Leistungsinformationen fortgesetzt wird, die Sendeleistung mit dem gerade ausgewählten Verstärker einzustellen, bis der Unterbrechungsbereich auftritt, dann, wenn die letzte empfangene Leistungsinformation vor dem Auftreten des Unterbrechungsbereichs immer noch nicht dem gerade ausgewählten Verstärker entspricht, das Senden während des Unterbrechungsbereichs verhindert wird, der der letzten Leistungsinformation zugeordnete Leistungsverstärker ausgewählt wird, und das Senden mit dem neuen ausgewählten Verstärker reaktiviert wird.

5. Verfahren nach Anspruch 4, **dadurch gekennzeichnet, dass** mindestens einer der Verstärker eine variable Verstärkung hat, und **dadurch**, dass der Wert der Verstärkung des ausgewählten Verstärkers in Abhängigkeit von den Leistungsinformationen geregelt wird.

6. Verfahren nach Anspruch 4 oder 5, **dadurch gekennzeichnet, dass** die gesendeten Informationen von Fragmenten gebildet und innerhalb von aufeinanderfolgenden Rahmen transportiert werden, die je in eine vorbestimmte Anzahl von Intervallen (SLi) unterteilt sind, **dadurch**, dass die Dauer des Schaltbereichs (PCM) in der Größenordnung von einigen Intervallen liegt, zum Beispiel 4 bis 8 Intervalle, und **dadurch**, dass die Dauer des Unterbrechungs-Zeitbereichs (PIT) in der Größenordnung von einigen Fragmenten liegt, zum Beispiel 2 bis 4 Fragmente.

7. Verfahren nach einem der Ansprüche 4 bis 6, **dadurch gekennzeichnet, dass** das Sendeunterbrechungskriterium (CRF) die Wahl mindestens eines besonderen vorbestimmten Ereignisses enthält, das während einer Sendung auftreten kann und eine vorbestimmte Einwirkung auf die Binärfehlerquote im Fall einer Sendeunterbrechung beim Auftreten dieses besonderen Ereignisses hat, **dadurch**, dass die Sendeeigenschaften analysiert werden, um das mögliche Vorhandensein dieses vorbestimmten besonderen Ereignisses innerhalb des Schaltbereichs zu erfassen, und **dadurch**, dass, wenn dieses Vorhandensein effektiv ist, der Unterbrechungs-Zeitbereich (PIT) beim Auftreten dieses besonderen Ereignisses angeordnet wird.

8. Verfahren nach Anspruch 7, **dadurch gekennzeichnet, dass** das Sendeunterbrechungskriterium die Wahl einer Gruppe von mehreren vorbestimmten besonderen Ereignissen, die während einer Sendung auftreten können, und die Ablaufplanung dieser besonderen Ereignisse gemäß einer vorbestimmten Prioritätsreihenfolge in Abhängigkeit von ihrer jeweiligen Einwirkung auf die Binärfehlerquote im Fall einer Sendeunterbrechung beim Auftreten dieser besonderen Ereignisse enthält, **dadurch**, dass die Eigenschaften der Sendung unter Beachtung der Prioritätsreihenfolge analysiert werden, um das mögliche Vorhandensein eines vorbestimmten besonderen Ereignisses der Gruppe während des Schaltbereichs (PCM) zu erfassen, und **dadurch**, dass der Unterbrechungs-Zeitbereich (PIT) beim Auftreten des ersten so erfassten besonderen Ereignisses in der Prioritätsreihenfolge angeordnet wird.

9. Verfahren nach Anspruch 8, **dadurch gekennzeichnet, dass** die gesendeten Informationen Daten und Prüfanzeigen aufweisen und innerhalb von aufeinanderfolgenden Rahmen transportiert werden, die je in eine vorbestimmte Anzahl von Intervallen unterteilt sind, **dadurch**, dass die Prüfanzeigen rückgesendete Informationen (FBI) und Transportformat-Kombinationsanzeiger (TFCI) aufweisen, und **dadurch**, dass die Gruppe von besonderen Ereignissen in abnehmender Prioritätsreihenfolge besteht aus:
- leeren Intervallen (TPG) bei einem komprimierten Sendemodus,
- Intervallen, während denen das Senden in einem zerhackten Sendemodus unterbrochen werden muss,
- Bereiche (P1INS, P2INS) der Pausenintervalle (INS) in einem diskontinuierlichen Übertragungsmodus, während denen weder Rückinformationen (FBI) noch Transportformat-Kombinationsanzeiger (TFCI) gesendet werden,
- Bereiche der Intervalle, während denen Daten gesendet werden, die einen hohen Streuungsfaktor haben, ohne Rückinformationen (PBI) oder Transportformat-Kombinationsanzeiger (TFCI) zu senden,
- Bereiche der Intervalle, während denen Daten gesendet werden, die einen geringen Streuungsfaktor haben, ohne Rückinformationen (FBI) oder Transportformat-Kombinationsanzeiger (TFCI) zu senden,
- Bereiche der Intervalle, während denen Rückinformationen (FBI) oder Transportformat-Kombinationsanzeiger (TFCI) gesendet werden.

10. Fernes Terminal eines drahtlosen Kommunikationssystems, das eine Empfangskette, eine Sendekette, eine Leistungsverstärkungsstufe, die zwischen der Sendekette und der Antenne angeschlossen ist, und eine Verarbeitungsstufe aufweist, die die Ausgangsleistung der Verstärkungsstufe in Abhängigkeit von Leistungsinformationen einstellen kann, die regelmäßig von der Empfangskette empfangen werden, **dadurch gekennzeichnet, dass** die Leistungsverstärkungsstufe eine Verstärkungseinrichtung mit variabler Verstärkung (MAGV) aufweist, die in der Lage ist, den Leistungsbereich abzudecken, und **dadurch**, dass die Verarbeitungsmittel ausgelegt sind, um den Wert der Verstärkung und die Speisespannung der Verstärkungseinrichtung in Abhängigkeit von den Leistungsinformationen zu regeln.

11. Terminal nach Anspruch 10, **dadurch gekennzeichnet, dass** die Verstärkungseinrichtung mindestens zwei einzeln auswählbare Leistungsverstärker (PA1, PA2) aufweist, die fähig sind, zusammen die Gesamtheit des Leistungsbereichs abzudecken, die je zwei unterschiedliche spezifische Betriebszonen und eine gemeinsame Betriebszone besitzen, **dadurch**, dass die Leistungsverstärkungsstufe außerdem Auswahlmittel (MWS) aufweist, die in der Lage sind, als Antwort auf eine Auswahlinformation den Ausgang der Sendekette mit dem Eingang des Leistungsverstärkers zu verbinden, der der Auswahlinformation entspricht, und **dadurch**, dass die Verarbeitungsstufe (ETNE) aufweist:
- eine Korrespondenztabelle (MM), die einen der Verstärker jedem Punkt des Leistungsbereichs zuordnet,
- Prüfmittel (MCT), die in Gegenwart einer empfangenen Leistungsinformation, die einem Punkt der gemeinsamen Zone entspricht, in der Lage sind, zu prüfen, ob diese Leistungsinformation dem gerade ausgewählten Verstärker entspricht, und
- Steuermittel, die in der Lage sind, wenn diese Leistungsinformation nicht dem gerade ausgewählten Verstärker entspricht, an die Auswahlmittel die Auswahlinformation zu liefern, die dem dieser Leistungsinformation zugeordneten Leistungsverstärker entspricht, und **dadurch**, dass die Steuermittel ebenfalls in der Lage sind, den Wert der Speisespannung des ausgewählten Verstärkers zu regeln.

12. Terminal nach Anspruch 11, **dadurch gekennzeichnet, dass** mindestens einer der Verstärker eine variable Verstärkung hat, und **dadurch**, dass die Steuermittel in der Lage sind, den Wert der Verstärkung des ausgewählten Verstärkers in Abhängigkeit von der Leistungsinformation zu regeln.

13. Terminal nach Anspruch 10, **dadurch gekennzeichnet, dass** die Verstärkungseinrichtung mindestens zwei einzeln auswählbare Leistungsverstärker (PA1, PA2), die fähig sind, zusammen die Gesamtheit des Leistungsbereichs abzudecken, die je zwei unterschiedliche spezifische Betriebszonen und eine gemeinsame Betriebszone besitzen, und Auswahlmittel (MWS) aufweist, die in der Lage sind, als Antwort auf eine Auswahlinformation den Ausgang der Sendekette mit dem Eingang des Leistungsverstärkers zu verbinden, der der Auswahlinformation entspricht, und **dadurch**, dass die Verarbeitungsstufe (ETNE) aufweist:
- eine Korrespondenztabelle (MM), die einen der Verstärker jedem Punkt des Leistungsbereichs zuordnet,
- Prüfmittel (MCT), die in Gegenwart einer empfangenen Leistungsinformation, die einem Punkt der gemeinsamen Zone entspricht, in der Lage sind, zu prüfen, ob diese Leistungsinformation dem gerade ausgewählten Verstärker entspricht, und im gegenteiligen Fall einen Schalt-Zeitbereich (PCM) zu definieren, der sich vom Empfangszeitpunkt der Leistungsinformation über eine vorbestimmte Dauer erstreckt, die mit den Grenzen der gemeinsamen Zone kompatibel ist, und in Abhängigkeit von einem vorbestimmten Sendeunterbrechungskriterium die zeitlichen Grenzen eines Unterbrechungs-Zeitbereichs (PIT) zu definieren, der sich im Schaltbereich befindet, und
- Steuermittel (MCD), die in der Lage sind, ggf. ausgehend von neuen empfangenen Leistungsinformationen die Fortsetzung der Einstellung der Sendeleistung mit dem gerade ausgewählten Verstärker bis zum Auftreten des Unterbrechungsbereichs zu erlauben, dann, wenn die letzte empfangene Leistungsinformation vor dem Auftreten des Unterbrechungsbereichs immer noch nicht dem gerade ausgewählten Verstärker entspricht, das Senden während des Unterbrechungsbereichs zu verhindern, die dem der letzten Leistungsinformation zugeordneten Leistungsverstärker entsprechende Auswahlinformation an die Auswahlmittel zu liefern, und das Senden mit dem neuen ausgewählten Verstärker zu reaktivieren, und **dadurch**, dass die Steuermittel ebenfalls in der Lage sind, den Wert der Speisespannung des ausgewählten Verstärkers zu regeln.

14. Terminal nach Anspruch 13, **dadurch gekennzeichnet, dass** mindestens einer der Verstärker eine variable Verstärkung hat, und **dadurch**, dass die Steuermittel in der Lage sind, den Wert der Verstärkung des ausgewählten Verstärkers in Abhängigkeit von der Leistungsinformation zu regeln.

15. Terminal nach Anspruch 13 oder 14, **dadurch gekennzeichnet, dass** die gesendeten Informationen von Fragmenten gebildet und innerhalb von aufeinanderfolgenden Rahmen transportiert werden, die je in eine vorbestimmte Anzahl von Intervallen unterteilt sind, **dadurch**, dass die Dauer des Schaltbereichs (PCM) in der Größenordnung von einigen Intervallen liegt, zum Beispiel 4 bis 8 Intervalle, und **dadurch**, dass die Dauer des Unterbrechungs-Zeitbereichs (PIT) in der Größenordnung von einigen Fragmenten liegt, zum Beispiel 2 bis 4 Fragmente.

16. Terminal nach einem der Ansprüche 13 bis 15, **dadurch gekennzeichnet, dass** das Sendeunterbrechungskriterium (CRF) die Wahl mindestens eines vorbestimmten besonderen Ereignisses aufweist, das während einer Sendung auftreten kann und eine vorbestimmte Einwirkung auf die Binärfehlerquote im Fall einer Sendeunterbrechung beim Auftreten dieses besonderen Ereignisses hat, **dadurch**, dass die Prüfmittel die Eigenschaften der Sendung analysieren, um das mögliche Vorhandensein dieses vorbestimmten besonderen Ereignisses innerhalb des Schaltbereichs zu erfassen, und dass, wenn dieses Vorhandensein effektiv ist, die Prüfmittel den Unterbrechungs-Zeitbereich beim Auftreten dieses besonderen Ereignisses anordnen.

17. Terminal nach Anspruch 16, **dadurch gekennzeichnet, dass** das Sendeunterbrechungskriterium die Wahl einer Gruppe von mehreren vorbestimmten besonderen Ereignissen, die während einer Sendung auftreten können, und die Ablaufplanung dieser besonderen Ereignisse in einer vorbestimmten Prioritätsreihenfolge in Abhängigkeit von ihrer jeweiligen Einwirkung auf die Binärfehlerquote im Fall einer Sendeunterbrechung beim Auftreten dieser besonderen Ereignisse enthält, **dadurch**, dass die Prüfmittel die Eigenschaften der Sendung unter Beachtung der Prioritätsreihenfolge analysieren, um das mögliche Vorhandensein eines vorbestimmten besonderen Ereignisses der Gruppe während des Schaltbereichs zu erfassen, und **dadurch**, dass die Prüfmittel den Unterbrechungs-Zeitbereich beim Auftreten des ersten so erfassten besonderen Ereignisses in der Prioritätsreihenfolge anordnen.

18. Terminal nach Anspruche 17, **dadurch gekennzeichnet, dass** die gesendeten Informationen Daten und Prüfanzeigen aufweisen und innerhalb von aufeinanderfolgenden Rahmen transportiert werden, die je in eine vorbestimmte Anzahl von Intervallen unterteilt sind, **dadurch**, dass die Prüfanzeigen rückgesendete Informationen (FBI) und Transportformat-Kombinationsanzeiger (TFCI) aufweisen, und **dadurch**, dass die Gruppe von besonderen Ereignissen in abnehmender Prioritätsreihenfolge besteht aus:
- leeren Intervallen bei einem komprimierten Sendemodus,
- Intervallen in einem zerhackten Sendemodus, während denen das Senden unterbrochen werden muss,
- Bereiche der Pausenintervalle in einem diskontinuierlichen Übertragungsmodus, während denen weder Rückinformationen (FBI) noch Transportformat-Kombinationsanzeiger (TFCI) gesendet werden,
- Bereiche der Intervalle, während denen Daten gesendet werden, die einen hohen Streuungsfaktor haben, ohne Rückinformationen (FBI) oder Transportformat-Kombinationsanzeiger (TFCI) zu senden,
- Bereiche der Intervalle, während denen Daten gesendet werden, die einen geringen Streuungsfaktor haben, ohne Rückinformationen (FBI) oder Transportformat-Kombinationsanzeiger (TFCI) zu senden,
- Bereiche der Intervalle, während denen Rückinformationen (FBI) oder Transportformat-Kombinationsanzeiger (TFCI) gesendet werden.

19. Terminal nach einem der Ansprüche 10 bis 18, **dadurch gekennzeichnet, dass** die Leistungsverstärkungsstufe eine getaktete Stromversorgung aufweist, die steuerbar und in der Lage ist, die regelbare Speisespannung der Verstärkungseinrichtung zu liefern.

20. Terminal nach einem der Ansprüche 10 bis 19, **dadurch gekennzeichnet, dass** es Mittel (MCPS) aufweist, die in der Lage sind, die von der Verstärkungseinrichtung mit variabler Verstärkung gesendete Leistung ausgehend von dem Signal, das am Ausgang der Verstärkungseinrichtung vorhanden ist, und von der vom Terminal empfangenen Soll-Leistungsinformation zu prüfen.

21. Terminal nach einem der Ansprüche 10 bis 20, **dadurch gekennzeichnet, dass** es ein zellulares Mobiltelefon ist.
